# EUROPEAN PATENT SPECIFICATION

(11) **EP 2 033 857 B1**
(45) Date of publication and mention of the grant of the patent: **31.08.2011**
(21) Application number: 08009981.5
(22) Date of filing: 30.05.2008
(51) Int. Cl.: B60R 22/405

(54) **Seat belt retractor and seat belt apparatus employing the same**
Sitzgurteinzug und Sitzgurtvorrichtung damit
Rétracteur de ceinture de sécurité et son appareil de ceinture de sécurité

(30) Priority: 04.09.2007 JP 2007229005
(43) Date of publication of application: 11.03.2009
(73) Proprietor: Takata Corporation, Tokyo 106-8510 (JP)
(72) Inventor: Hiramatsu, Koji, Tokyo 106-8510 (JP); Kanamori, Yasushi, Tokyo 106-8510 (JP); Hisaki, Masao, Tokyo 106-8510 (JP)
(74) Representative: Banzer, Hans-Jörg

(56) References cited:
- EP-A- 0 811 535
- EP-A- 0 934 856
- EP-A- 1 462 323
- EP-A- 1 683 692
- GB-A- 2 265 815
- GB-A- 2 269 308
- US-A- 5 826 813

## Description

### Technical Field of the Invention

The present invention relates to a technical field of a seat belt retractor, in a seat belt apparatus which is installed in a vehicle such as an automobile for restraining an occupant with a seat belt withdrawn from the seat belt retractor, in which an end lock due to a vehicle sensor or an end lock due to the vehicle sensor and a webbing sensor may occur and which has at least an emergency locking mechanism and an automatic locking mechanism. The present invention also relates to a technical field of a seat belt apparatus which employs the aforementioned seat belt retractor and restrains an occupant with a seat belt withdrawn from the seat belt retractor.

### Related Art

Conventionally, a seat belt apparatus installed in a vehicle such as an automobile restrains an occupant with a seat belt made of webbing in the event of an emergency such as a collision in which a large deceleration acts on a vehicle so as to prevent the occupant from jumping out of a vehicle seat.

Such a seat belt apparatus generally comprises a seat belt retractor. As an example of such a seat belt retractor, there is known a seat belt retractor which is provided with a function as an emergency locking-type seat belt retractor (ELR) for preventing the withdrawal of the seat belt and a function as an automatic locking-type seat belt retractor (ALR) of which actuation is started when the seat belt is fully withdrawn so as to prevent the withdrawal of the seat belt while the seat belt is wound up, and of which actuation is cancelled when the seat belt is fully wound up (see, for example, JP-A-2004-262447).

Similarly to a typical seat belt retractor having the ELR function and the ALR function, the seat belt retractor disclosed in JP-A-2004-262447 comprises a U-like frame, a belt reel and a shaft (spool) which are rotatably supported between left and right side walls of the frame to wide up the seat belt, a spring mechanism which is attached to one of the side walls of the frame and is composed of a spiral spring or the like for applying force to the spool for winding up the seat belt, a locking pawl as a locking member which is engaged with one of ratchet teeth formed in the frame so as to prevent the spool from rotating in the belt withdrawal direction, a ratchet wheel (lock gear) which has ratchet teeth on its outer periphery and which normally rotates together with the spool and is prevented from rotating in the belt withdrawal direction so as to create a relative rotation between the ratchet wheel and the spool so as to actuate the locking pawl in the event of an emergency in which a large deceleration larger than a predetermined value acts on a vehicle, an acceleration sensing mechanism (vehicle sensor) which has an engaging claw at its end and a lever (actuator) in which the lever is actuated to engage its engaging claw with one of the ratchet teeth of the lock gear when a large deceleration is detected by an inertia body in the event of the emergency as mentioned above so as to prevent the lock gear from rotating in the belt withdrawal direction, an inertial mass which is oscillatably supported by the lock gear and has an engaging claw, the ratchet teeth attached to the frame with which the engaging claw is engaged, an internal gear ring (ring gear) which has internal teeth formed in a retainer attached to the other side wall of the frame and is formed coaxially with the spool, an eccentric disk which rotates together with the spool and eccentrically from the center of the spool, a control ring which is rotated at a speed controlled and reduced by the eccentric disk and has external teeth which mesh with the internal teeth of the ring gear, and an ALR lever for exercising the ALR function of which actuation is controlled by the control ring and is started when the seat belt is fully withdrawn to switch from the ELR function mode to the ALR function mode and of which actuation is cancelled when the seat belt is fully wound to switch from the ALR function mode to the ELR function mode.

The seat belt retractor exercises the ELR function when the seat belt is withdrawn by such an amount not to be fully withdrawn. In the ELR function mode, as a large deceleration acts on the vehicle in the event of an emergency as mentioned above, the vehicle sensor is actuated. That, is, the inertial mass detects the deceleration to actuate the actuator. The actuation of the actuator engages the engaging claw of the actuator with one of the ratchet teeth of the lock gear so as to lock the lock gear from rotating in the belt withdrawal direction. Then, a relative rotation is created between the spool which is about to rotate in the withdrawing direction because of the inertia of the occupant and the lock gear which is locked from rotating in the withdrawal direction. By this relative rotation, the locking pawl (corresponding to the locking mechanism of the present invention) is actuated and is thus engaged with one of the ratchet wheel formed in the frame, thereby preventing the spool from rotating in the belt withdrawal direction. Therefore, the withdrawal of the seat belt is stopped so that the forward movement of the occupant due to the inertia is prevented and the occupant is restrained by the seat belt.

As the seat belt is withdrawn rapidly at a speed higher than that of the normal belt withdrawal for wearing the seat belt, the webbing sensor is actuated. That is, the lock gear is rapidly rotated by rapid withdrawal of the seat belt so as to actuate the inertial mass. Then, the engaging claw of the inertial mass is engaged with one of the ratchet teeth, thereby preventing the lock gear from rotating in the belt withdrawal direction. Therefore, similarly to the operation of the vehicle sensor as mentioned above, the rotation of the spool in the belt withdrawal direction is locked, thereby preventing the withdrawal of the seat belt.

For example, in case of exercising the ALR function to fix a child seat to a vehicle seat with the seat belt, the seat belt is fully withdrawn. Then, the control ring of the automatic locking mechanism (ALR mechanism) detects that the seat belt is fully withdrawn from its eccentric rotation so as to actuate the ALR lever, thereby switching the seat belt retractor from the ELR function mode to the ALR function mode. In the ALR function mode, the rotation of the spool in the belt withdrawal direction is locked by the actuation of the ALR lever so as to prevent the seat belt from being withdrawn on the way until the seat belt is fully wound. As the seat belt is fully (completely) wound, the actuation of the ALR lever is cancelled, thereby returning the seat belt retractor from the ALR function mode to the ELR function mode.

By the way, as the occupant disengages the tongue from the buckle and release the tongue or the seat belt for cancelling the wearing the seat belt, the seat belt is rapidly wound by the spool which is biased in the belt winding direction by the spring mechanism. Then, as the seat belt is fully wound, the rotation of the spool is suddenly stopped. Accordingly, the actuator of the vehicle sensor may rotate so that the engaging claw is engaged with one of the ratchet teeth of the lock gear. In this case, the rotation of the spool in the belt withdrawal direction is locked so that it is impossible to withdraw the seat belt again. That is, so-called end lock occurs.

For preventing this, a seat belt retractor in which a circular arc pressing portion (stopper) is disposed on the outer periphery of a substantially disk-like cam plate for exercising the ALR function has been proposed (see, for example, JP-A-09-150712). The stopper is adapted to move in a rotational direction of a lock wheel (lock gear), by the rotation of the cam plate at a reduced speed according to the rotation of the spool, between an engagement allowing position where the stopper allows an engaging pawl of a vehicle sensor to be engaged with one of the ratchet teeth of the lock gear and an engagement preventing position where the stopper prevents the engaging claw of the vehicle sensor from being engaged with the ratchet teeth of the lock gear. When the seat belt is fully or nearly fully wound by the spool, the stopper is set to the engagement preventing position.

According to the seat belt retractor disclosed in JP-A-09-150712, when the seat belt is fully wound, the stopper is set to the engagement preventing position so that the engaging claw of the vehicle sensor is prevented from being engaged with the ratchet teeth of the lock gear. Therefore, the end lock by the engaging claw of the vehicle sensor is prevented from occurring.

A seat belt refractor according to the preamble of claim 1 is known from US 5,826,813.

### Disclosure of the Invention

### Problems to be solved by the Invention

However, in the seat belt retractor disclosed in JP-A-09-150712, the stopper is disposed on the outer periphery of the cam plate and rotates together with the cam plate so that the stopper can be positioned in a region between the ratchet teeth of the lock gear and the engaging claw of the vehicle sensor and can pass this region. Because of this structure, the cam plate must be large. The large cam plate makes large rotational trajectory of the outer periphery of the cam plate. This requires large space for movement. Further, for preventing the stopper from interfering the engaging claw of the vehicle sensor in the rotation direction while the stopper passes between the ratchet teeth of the lock gear and the engaging claw, the distance between the engaging claw and the ratchet teeth is required to be larger than that of a conventional ELR. Accordingly, the seat belt retractor disclosed in JP-A-09-150712 must be large.

Moreover, since the large distance between the engaging claw and the ratchet teeth makes the moving distance of the engaging claw between the inoperative position and the operative position large, the vehicle sensor also must be large.

Because of diversification of recent vehicles, the layout of seat belt apparatuses to be installed in vehicles becomes diverse. The combination of the operation range of the cam plate and the operation range of the stopper generally depends on the layout of the seat belt apparatus. However, in the seat belt retractor disclosed in JP-A-09-150712, the stopper for preventing the engaging claw from being engaged with the ratchet teeth at the completion of the belt winding and the cam plate for exercising the ALR function are formed integrally, that is, composed of a same part. For adapting the seat belt retractor disclosed in JP-A-09-150712 to various layouts of seat belt apparatuses, each exclusive part composing the stopper and the cam plate is required for each layout because the stopper and the cam plate are formed integrally, i.e. composed of one part. That is, exclusive parts of which number is equal to the number of layouts are required, thus not only increasing the number of kinds of parts but also increasing the cost. For example, if there are nine kinds of mounting layouts of seat belt apparatuses, nine kinds of exclusive parts corresponding to combinations of different operation ranges of the cam plate and different operation ranges of the stopper are required.

The present invention was made under the aforementioned circumstances and an object of the present invention is to provide a seat belt retractor which can effectively prevent an end lock due to an engaging pawl of a vehicle sensor and of which structure for preventing the end lock has a reduced size and to provide a seat belt apparatus employing the seat belt retractor.

It is another object of the present invention to provide a seat belt retractor which can be flexibly and inexpensively adapted to various mounting layouts with less kind of parts corresponding to the combination of an ALR function and an end-lock preventive unit and to provide a seat belt apparatus employing the seat belt retractor.

### Means to solve the Problems

According to the present invention, these objects are achieved by a seat belt retractor as defined in claim 1 and a seat belt apparatus as defined in claim 7. The dependent claims define preferred and advantageous embodiments of the invention.

To solve the aforementioned problems, a seat belt retractor according to an aspect of the invention comprises at least a seat belt for restraining an occupant, a spool which is rotatably supported by a frame to wind up said seat belt, an emergency locking mechanism which detects a deceleration larger than the normal one when the deceleration acts on a vehicle and prevents said spool from rotating in the belt withdrawing direction, wherein said emergency locking mechanism comprises at least a locking mechanism which allows the rotation of said spool when said emergency locking mechanism is not in operation and prevents the rotation of said spool in the belt withdrawing direction when said emergency locking mechanism is in operation, a lock gear which has ratchet teeth formed on the outer periphery thereof and arranged in an annular shape and which rotates together with said spool when said emergency locking mechanism is not in operation and actuates said locking mechanism when said emergency locking mechanism is in operation because a relative rotation is created between said lock gear and said spool, and a vehicle sensor which has an engaging claw and which detects a deceleration larger than the normal one in the event of an emergency in which the deceleration acts on the vehicle and is thus actuated to engage said engaging claw with one of the ratchet teeth of said lock gear to prevent the rotation of said lock gear in the belt withdrawing direction, thereby creating a relative rotation between said spool and said lock gear, said seat belt retractor further comprising a first end lock preventive mechanism which prevents the engaging claw of said vehicle sensor from being engaged with one of the ratchet teeth of said lock gear when the seat belt is fully or nearly fully wound by said spool, and wherein said first end lock preventive mechanism comprises an end lock preventive member which is disposed on said frame and which is set at a locking position where said end lock preventive member does not allow the engaging claw of said vehicle sensor to be engaged with any one of the ratchet teeth of said lock gear when said seat belt is fully or nearly fully wound and is set at a non-locking position where said end lock preventive member allows the engaging claw of said vehicle sensor to be engaged with one of the ratchet teeth of said lock gear other than when said seat belt is fully or nearly fully wound, and a control element which sets said end lock preventive member at the locking position when said seat belt is fully or nearly fully wound and sets said end lock preventive member at the non-locking position other than when said seat belt is fully or nearly fully wound.

A seat belt retractor according to an embodiment of the invention is characterized by further comprising an automatic locking mechanism which is actuated when said seat belt is fully withdrawn and prevents the withdrawal of said seat belt on the way of winding said seat belt after the seat belt is fully withdrawn until a certain amount of the seat belt is wound, and a lock switching mechanism for switching the seat belt retractor between an emergency locking function mode in which an emergency locking function by said emergency locking mechanism is exercised and an automatic locking function mode in which an automatic locking function by said automatic locking mechanism is exercised, wherein said control element is disposed on a control member of said lock switching mechanism.

Further, a seat belt retractor according to another embodiment of the invention is characterized in that said lock switching mechanism comprises a switching lever which is selectively set at either of an emergency locking position where said emergency locking function mode is set or an automatic locking position where said automatic locking function mode is set, and an eccentric gear which rotates when said spool rotates and at a speed lower than the rotation speed of said spool and which has switching lever control cam member for switching the setting position of said switching lever, that the control member of said lock switching mechanism is composed of said eccentric gear and said end lock preventive member is composed of an end lock preventive lever which is selectively set at either of said locking position or said un-locking position, and that said control element is an end lock preventive member control cam for switching the setting position of said end lock preventive lever.

The seat belt retractor according to the invention is characterized by further comprising a webbing sensor which is pivotally disposed on said lock gear and which detects a withdrawal acceleration larger than normal withdrawal acceleration for wearing the seat belt when said seat belt is rapidly withdrawn and is thus actuated to prevent the rotation of said lock gear in the belt withdrawing direction so as to create a relative rotation between said spool and said lock gear, and a second end lock preventive mechanism for preventing the actuation of said webbing sensor when said seat belt is fully or nearly fully wound.

Moreover, a seat belt retractor according to an embodiment of the invention is characterized in that said second end lock preventive mechanism has an actuation preventive member which is controlled its actuation by said eccentric gear and prevents the actuation of said webbing sensor when said seat belt is fully or nearly fully wound.

According to an embodiment, a seat belt retractor is characterized in that said second end lock preventive mechanism further has a ring member disposed on said webbing sensor, and that said actuation preventive member is a stopper which presses said ring member to prevent the actuation of said webbing sensor when said seat belt is fully or nearly fully wound.

Furthermore, a seat belt retractor may be characterized in that said stopper is provided with a stopper biasing means for biasing said stopper in such a direction that said stopper presses said ring member.

On the other hand, a seat belt apparatus according to the invention comprises at least a seat belt for restraining an occupant, a seat belt retractor which winds up said seat belt while allowing the withdrawal of said seat belt and is actuated in the event of an emergency so as to prevent the withdrawal of said seat belt; a tongue slidably supported by said seat belt withdrawn from said seat belt retractor; and a buckle which is fixed to a vehicle floor or a vehicle seat and to which said tongue can be detachably latched, and is characterized in that said seat belt retractor is a seat belt retractor as described above.

### Effects of the Invention

In the seat belt retractor of the present invention having the aforementioned structure, the control element of the first end lock preventive mechanism, disposed on the control member for the lock switching mechanism for switching the seat belt retractor between the emergency locking function mode and the automatic locking function mode, sets the end lock preventive member disposed on the frame at the locking position where the engaging claw of the vehicle sensor is not allowed to be engaged with any one of the ratchet teeth of the lock gear when the seat belt is fully or nearly fully wound. Accordingly, when the seat belt is fully or nearly fully wound, an end lock due to the vehicle sensor can be prevented. Since the end lock preventive member is not required to rotate together with the control member of the lock switching mechanism, the end lock preventive member can be designed to have a reduced operational range and thus requires only a small moving space.

In addition, since the end lock preventive member is not required to pass through a space between the ratchet teeth of the lock gear and the engaging claw of the vehicle sensor, there is no possibility that the end lock preventive member interferes the engaging claw. Therefore, the distance between the engaging claw and the ratchet teeth is not required to be changed similarly to the conventional ELR. That is, the seat belt retractor of the present invention can be formed compact even with the first end lock preventive mechanism.

In addition, the distance between the engaging claw of the vehicle sensor and the ratchet teeth of the lock gear is equal to a conventional ELR or ALR without end lock preventive mechanism for preventing an end lock due to the vehicle sensor. Accordingly, the moving distance of the engaging claw between the inoperative position and the operative position is not required to be changed, thus preventing the vehicle sensor from being large. Moreover, even with the end lock preventive mechanism, a conventional vehicle sensor can be used as the vehicle sensor of the seat belt retractor of the present invention without any change, thereby manufacturing the seat belt retractor of the present invention inexpensively.

Since the control member of the automatic locking mechanism is used for controlling the operation of the end lock preventive member, an exclusive control member for controlling the end lock preventive member is not required. Accordingly, the number of parts in the automatic locking-type seat belt retractor can be reduced even when the first end lock preventive mechanism is provided.

Further, since the end lock preventive member is composed of an end lock preventive lever disposed on the frame and the end lock preventive member control cam is simply disposed on the eccentric gear as the control member of the automatic locking mechanism for controlling the end lock preventive lever, the seat belt retractor can be flexibly and inexpensively adapted to various layouts of seat belt apparatuses with less kind of parts by suitably setting the position of the end lock preventive member control cam relative to the eccentric gear.

According to an embodiment, the lock switching mechanism comprises the switching lever and the eccentric gear having the switching lever control cam member for switching the setting position of the switching lever, the control member of the lock switching mechanism is composed of the eccentric gear, the end lock preventive member is composed of the end lock preventive lever which is set selectively between the locking position and non-locking position, and the control element is composed of the end lock preventive member control cam for switching the setting position of the end lock preventive lever. Therefore, an end lock can be further stably prevented with a further simple structure.

According to the invention, in the seat belt retractor also provided with the webbing sensor, the second end lock preventive mechanism prevents the actuation of the webbing sensor when the seat belt is fully or nearly fully wound, thereby preventing not only an end lock due to the vehicle sensor but also an end lock due to the webbing sensor. Therefore, occurrence of an end lock when the seat belt is fully or nearly fully wound is further effectively prevented.

According to an embodiment of the invention, since the second end lock preventive mechanism is provided with the actuation preventive member which is controlled by rotation of the eccentric gear to prevent the actuation of the webbing sensor when the seat belt is fully or nearly fully wound, the actuation of the webbing sensor can be effectively prevented by a simple structure.

Further, since the second end lock preventive mechanism may be composed of the ring member provided on the webbing sensor and the stopper for preventing the actuation of the webbing sensor by pressing the ring member when the seat belt is fully or nearly fully wound, a conventional known webbing sensor can be employed without significant design change and the second end lock preventive mechanism can have a simple structure because all that is required is to simply press the ring member by the stopper.

Furthermore, according to an embodiment of the invention, the stopper is biased in the direction pressing the ring member by means of the stopper biasing means. Therefore, the ring member of the webbing sensor can be locked with larger force.

On the other hand, according to the seat belt apparatus according to the present invention, the seat belt retractor of the present invention is employed and thus respective end locks due to the vehicle sensor and the webbing sensor can be effectively prevented, thereby improving the operability of the seat belt and enabling smooth and stable action for wearing the seat belt by the occupant.

### Brief Explanation of the drawings

Fig. 1 is a perspective view schematically showing a seat belt apparatus comprising a seat belt retractor as an embodiment according to the present invention.
Fig. 2 is a vertical sectional view schematically showing the seat belt retractor of the embodiment according to the present invention.
Fig. 3 is an exploded perspective view of an ELR-ALR switching mechanism, an end lock preventive mechanism for a vehicle sensor, and an end lock preventive mechanism for a webbing sensor of the seat belt retractor of this embodiment.
Figs. 4(a), 4(b) are illustrations showing the behavior of the webbing sensor of the seat belt retractor of the embodiment, wherein Fig. 4(a) is an illustration showing the webbing sensor in its inoperative state, and Fig. 4(b) is an illustration showing the webbing sensor in its operative state.
Fig. 5 is an illustration showing the ELR-ALR switching mechanism, the end lock preventive mechanism for the vehicle sensor, and the end lock preventive mechanism for the webbing sensor of the seat belt retractor of this embodiment.
Figs. 6(a) and 6(b) are illustrations for explaining the end lock preventive mechanism for the webbing sensor of the seat belt retractor of this embodiment, wherein Fig. 6(a) is an explanatory view of stoppers and Fig. 6(b) is an explanatory view of cam grooves for controlling the stoppers.
Figs. 7(a)-7(d) are illustrations for explaining a part of switching action from the ELR function mode to the ALR function mode.
Figs. 8(a) and 8(b) are illustrations for explaining another part of the switching action from the ELR function mode to the ALR function mode.
Figs. 9(a)-9(d) are illustrations for explaining a part of the action of the end lock preventive mechanism for the vehicle sensor.
Figs. 10(a) and 10(b) are illustrations for explaining another part of the action of the end lock preventive mechanism for the vehicle sensor.
Figs. 11(i)(a) and 11(i)(b) are illustrations for explaining a part of the action of the end lock preventive mechanism for the fly wheel and Figs. 11(ii)(a) and 11(ii)(b) are illustrations for explaining a part of the behavior of a pair of stoppers and cam grooves for controlling the action of the end lock preventive mechanism for the fly wheel.
Figs. 12(i)(a) and 12(i)(b) are illustrations for explaining another part of the action of the end lock preventive mechanism for the fly wheel and Figs. 12(ii)(a) and 12(ii)(b) are illustrations for explaining another part of the behavior of the pair of stoppers and the cam grooves for controlling the action of the end lock preventive mechanism for the fly wheel.
Fig. 13(i)(a) is an illustration showing a remaining part of the action of the end lock preventive mechanism for the fly wheel and Fig. 13(ii)(a) is an illustration showing a remaining part of the behavior of the pair of stoppers and the cam grooves for controlling the action of the end lock preventive mechanism for the fly wheel.
Fig. 14 is an illustration showing stoppers of an alternative embodiment of the present invention.

### Best Modes for carrying out the Invention

Hereinafter, best modes for carrying out the present invention will be described with reference to the attached drawings.

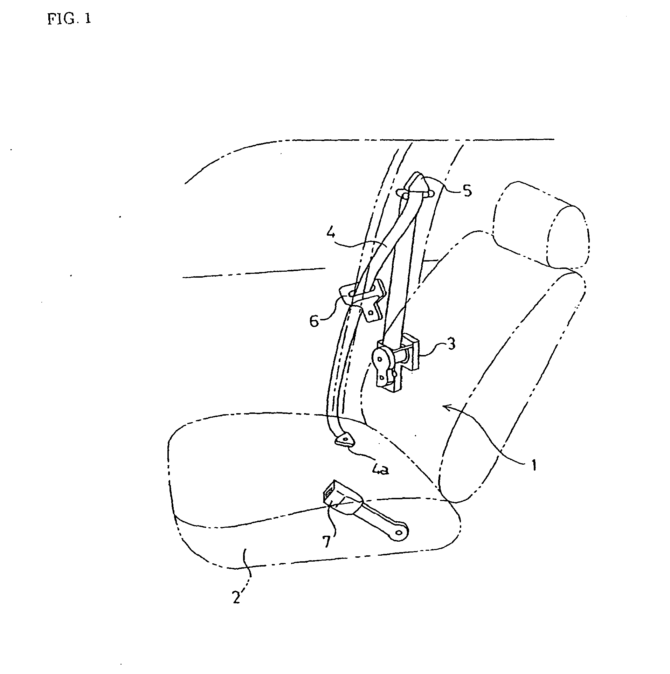

Fig. 1 is an illustration schematically showing a seat belt apparatus comprising a seat belt retractor as an embodiment according to the present invention.

As shown in Fig. 1, the seat belt apparatus 1 of this embodiment comprises, similarly to a conventionally known seat belt apparatus of a three-point type using a seat belt retractor, a seat belt retractor 3 which is fixed to a vehicle body near a vehicle seat 2, a seat belt 4 which is withdrawn from the seat belt retractor 3 and is provided at its end with a belt anchor 4a fixed to a vehicle floor or the vehicle seat 2, a deflection fitting 5 for guiding the seat belt 4 withdrawn from the seat belt retractor 3 toward an occupant's shoulder, a tongue 6 which is slidably supported by the seat belt 4 guided by and extending from the deflection fitting 5, and a buckle 7 which is fixed to the vehicle floor or the vehicle seat 2 and to which the tongue 6 can be inserted and detachably latched.

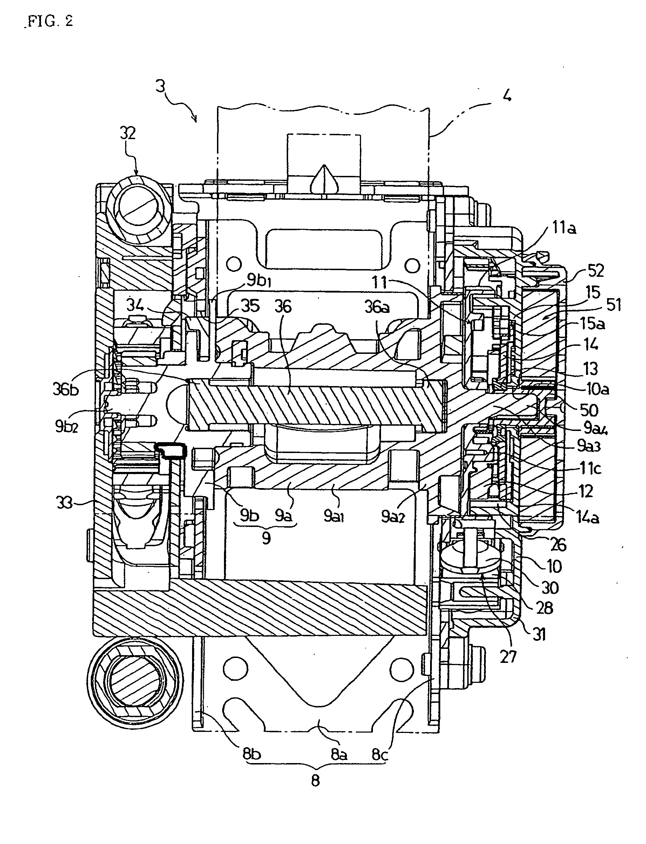

The seat belt retractor 3 of this embodiment comprises, similarly to the conventionally known typical seat belt retractor, a U-like frame 8 which is composed of a back wall 8a and left and right side walls 8b, 8c projecting from the both side edges of the back wall 8a in a direction perpendicular to the extending direction of the back wall 8a as shown in Fig. 2.

A spool 9 on which the seat belt 4 is wound is inserted through circular holes formed in the both side walls 8b, 8c of the frame 8 so that the spool 9 is rotatably disposed. The spool 9 comprises a first spool section 9a and a second spool section 9b which is coaxially and rotatably fitted into a left end portion of the first spool portion 9a. The first spool section 9a has a belt winding portion 9a₁, a flange portion 9a₂ which is formed at the right end of the belt winding portion 9a₁, and a rotary shaft 9a₃ which projects from the flange portion 9a₂ in the axial direction. The second spool section 9b has a flange portion 9b₁ and a rotary shaft 9b₂ which projects from the flange portion 9b₁ in the axial direction.

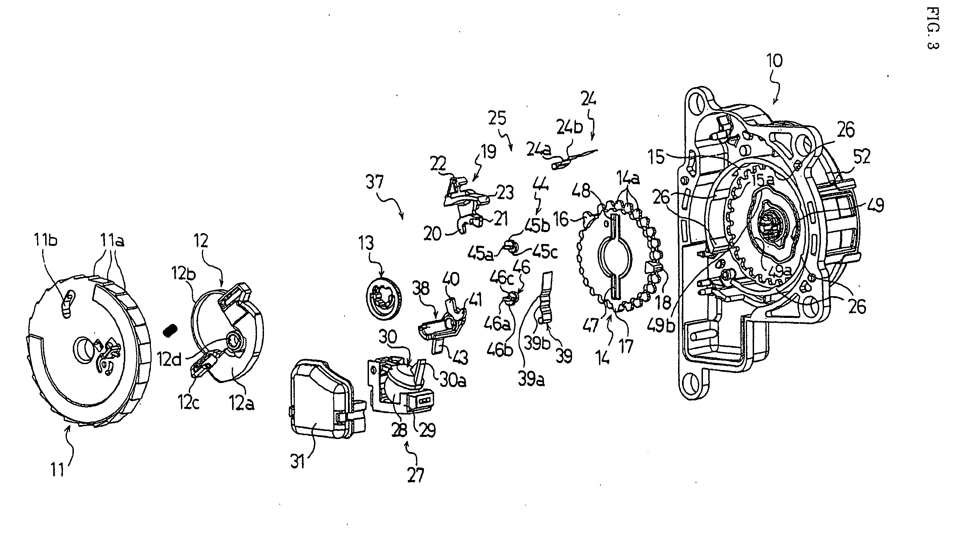

An end portion 9a₄ of the rotary shaft 9a₃ of the first spool section 9a is supported by a cover 52 of a casing 10 fixed to the side wall 8c via a bush 50 such that the rotary shaft 9a₃ rotates together with the bush 50. A lock gear 11 is coaxially fitted to the rotary shaft 9a₃. In this case, similarly to a conventionally known lock gear 11, the lock gear 11 rotates together with the rotary shaft 9a₃ when the lock gear 11 is not prevented from rotating. The rotary shaft 9a₃ rotates relative to the lock gear 11 when the lock gear 11 is prevented from rotating. As shown in Fig. 3, the lock gear 11 has a predetermined number of ratchet teeth 11a which are formed on the outer periphery thereof and are formed in an annular shape as a whole and also has a cam hole 11b which is formed in a side surface of the lock gear 11.

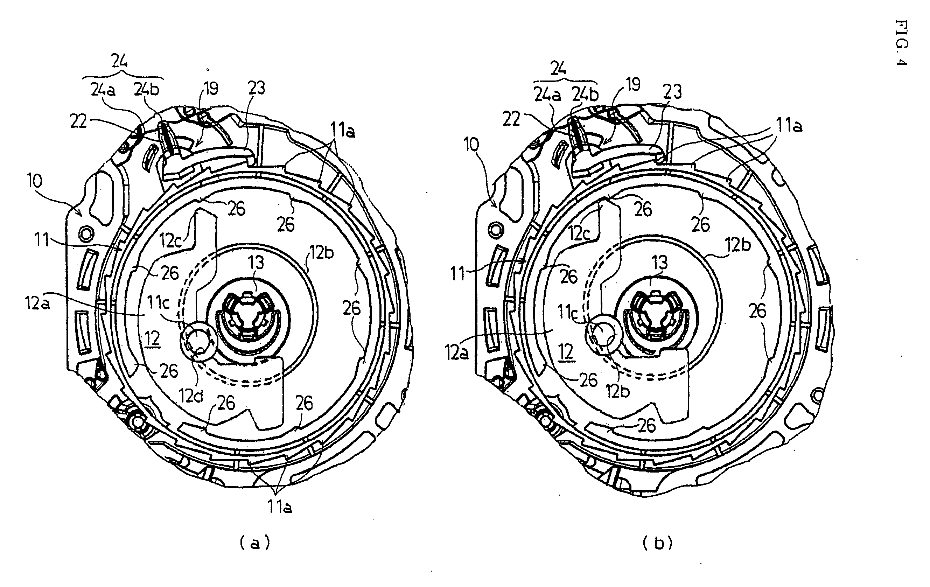

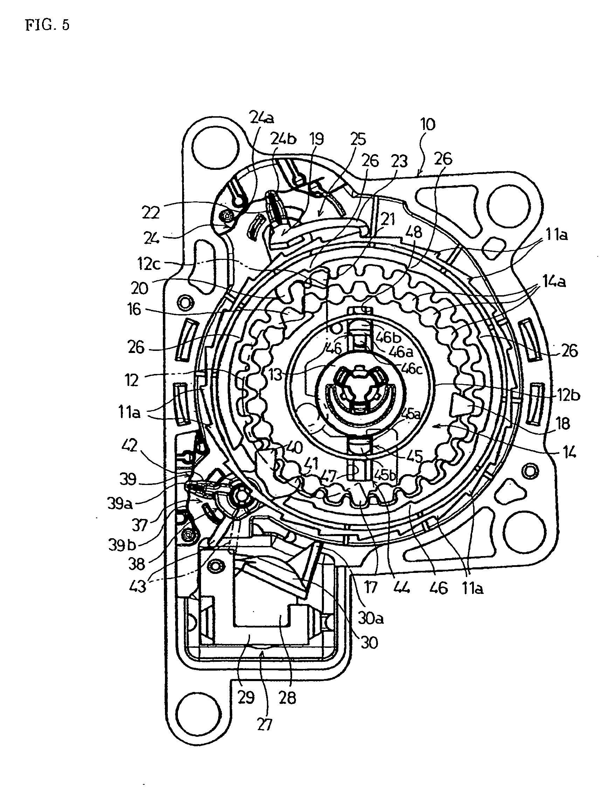

As shown in Fig. 2 and Fig. 3, a fly wheel 12 composing the webbing sensor and being an inertia member is oscillatably supported by the lock gear 11. In this case, the fly wheel 12 comprises an inertial mass portion 12a and a ring portion 12b. The inertial mass portion 12a has a through hole 12d formed therein into which a projecting pin 11c formed on the lock gear 11 is fitted so that the fly wheel 12 is oscillatably supported. The inertial mass portion 12a has an engaging claw 12c formed thereon. The ring portion 12b is formed in an annular shape as shown in Figs. 4(a), 4(b), and Fig. 5.

Fitted and fixed to the rotary shaft 9a₃ of the first spool section 9a is an eccentric disk 13. An eccentric gear 14 is supported on the eccentric disk 13 such that the eccentric gear 14 is rotatable relative to the eccentric disk 13.

The eccentric gear 14 has a predetermined number of external teeth 14a. The external teeth 14a can mesh with internal teeth 15a of a ring gear 15 which is formed in the casing 10 coaxially with the spool 9 and of which outer diameter is larger than the outer diameter of the eccentric gear 14. The eccentric gear 14 has a first lever operation cam 16, a second lever operation cam 17, and a third lever operation cam 18. In this case, the third lever operation cam 18 composes a control element of the present invention.

As shown in Fig. 3 and Fig. 4(a), rotatably supported on the casing 10 is a switching lever 19. The switching lever 19 has an engaging lever 20 and a disengaging lever 21. The switching lever 19 also has a projection 22 and an engaging arm 23 projecting toward the disengaging lever 21. The projection 22 is engaged with either one of two first and second concavities 24a, 24b as curves respectively formed in a switching lever position control spring 24 composed of a plate spring, thereby positioning the switching lever 19.

That is, when the projection 22 is engaged with the first concavity 24a, the switching lever 19 is placed and held at such a position that the engaging lever 20 is allowed to be in contact with the first lever operation cam 16. In this case, the engaging arm 23 of the switching lever 19 is set at such a position that the engaging arm 23 is not allowed to be engaged with any one of the ratchet teeth 11a of the lock gear 11, whereby the seat belt retractor 3 is set at an emergency locking mode where the seat belt retractor 3 exercises the ELR function. When the projection 22 is engaged with the second concavity 24b, the switching lever 19 is placed and held at such a position that the disengaging lever 21 is allowed to be in contact with the second lever operation cam 17. In this case, the engaging arm 23 of the switching lever 19 is set at such a position that the engaging arm 23 is allowed to be engaged with one of the ratchet teeth 11 a when the lock gear 11 rotates in the belt withdrawing direction. Then, the engaging arm 23 is engaged with one of the ratchet teeth 11a by the rotation of the lock gear 11 in the belt withdrawing direction, thereby preventing the rotation of the spool 9 in the belt withdrawing direction. Accordingly, the seat belt retractor 3 is set to the automatic locking mode where the retractor 3 exercises the ALR function of the automatic locking mechanism (ALR mechanism). The eccentric disk 13, the eccentric gear 14, the first and second lever operation cams 16, 17, and the switching lever 19 cooperate together to compose the lock switching mechanism of the present invention.

The eccentric disk 13, the eccentric gear 14, the ring gear 15, the first lever operation cam 16, the second lever operation cam 17, the switching lever 19, and the switching lever position control spring 24 cooperate together to compose an ELR-ALR switching mechanism 25. Since detailed structure and detailed operation of the ELR-ALR switching mechanism 25 are described in the publication JP-A-2004-262447 and thus can be readily understood with reference to the publication, these will be omitted.

Similarly to the conventionally known webbing sensor, the fly wheel 12 is arranged such that the engaging claw 12c can be engaged with any one of the predetermined number of the ratchet teeth 26 as internal teeth formed in the casing 10 and arranged in an annular shape. In this case, when the seat belt retractor 3 is not in operation (the seat belt 4 is fully wound) and the seat belt 4 is withdrawn at a withdrawing acceleration equal to or lower than a normal withdrawing acceleration for wearing the seat belt, the fly wheel 12 rotates together with the lock gear 11 (i.e. the spool 9) and is held at such a position as shown in Fig. 4(a) that the engaging claw 12c is not allowed to be engaged with any one of the ratchet teeth 26. When the seat belt 4 is rapidly withdrawn at a relatively large withdrawing acceleration exceeding the aforementioned normal withdrawing acceleration, the fly wheel 12 oscillates relative to the rotation of the lock gear 11 (i.e. the spool 9) because of inertial delay of the inertial mass portion 12a and is set at such a position as shown in Fig. 4(b) that the engaging claw 12c is engaged with one of the ratchet teeth 26. Therefore, when the seat belt 4 is rapidly withdrawn, the rotation of the spool 9 in the belt withdrawing direction is prevented so as not to allow the withdrawal of the seat belt 4.

Further, as shown in Fig. 2 and Fig. 3, a vehicle sensor 27 as a deceleration detecting mechanism is attached to the side wall 8c. The vehicle sensor 27 is a conventionally known vehicle sensor and comprises an inertia ball 28 which is actuated when a large deceleration is applied to the vehicle such as the event of a vehicle collision, a casing 29 which is attached to the side wall 8c to support the inertia ball 28, an actuator 30 which is pivotally mounted to the casing 29 and is actuated by the actuation of the inertia ball 28, and a cover 31 which is attached to the casing 29. In this case, the actuator 30 has an engaging claw 30a. When the inertia ball 28 is not actuated, the engaging claw 30a is held at such a position that the engaging claw 30a is not allowed to be engaged with any one of the ratchet teeth 11a of the lock gear 11. When the inertia ball 28 is actuated, the engaging claw 30a is set at such a position that the engaging claw 30a is allowed to be engaged with one of the ratchet teeth 11a. When the engaging claw 30a is not engaged with any one of the ratchet teeth 11a, the lock gear 11 is allowed to rotate in both the belt winding direction and the belt withdrawing direction. When the engaging claw 30a is engaged with one of the ratchet teeth 11a, the lock gear 11 is prevented from rotating in the belt withdrawing direction.

Disposed on the side wall 8b is a conventionally known pretensioner 32. The rotary shaft 9b₂ of the second spool section 9b is rotatably supported by a casing 33 for the pretensioner 32. The pretensioner 32 is actuated in the event of an emergency. The operational force of the pretensioner 32 is transmitted to the second spool section 9b so that the spool 9 is rotated in the belt winding direction. Therefore, the seat belt 4 is wound up at an early stage of the emergency, thereby increasing the belt tension.

Rotatably supported by the second spool section 9b is a conventionally known pawl 34. The pawl 34 can be engaged with one of a predetermined number of teeth 35 formed in the inner periphery of the opening of the side wall 8b. When the first spool section 9a and the lock gear 11 rotate together in the belt withdrawing direction, the pawl 34 is held at such a position that the pawl 34 is not allowed to be engaged with any one of the teeth 35. When the first spool section 9a rotates in the belt withdrawing direction relative to the lock gear 11, the pawl 34 is set by a control member (not shown), which is controlled by a cam hole 11b of the lock gear 11, at such a position that the pawl 34 is allowed to be engaged with one of the teeth 35. When the pawl 34 is not engaged with any one of the teeth 35, the second spool section 9b is allowed to rotate in both the belt winding direction and the belt withdrawing direction. When the pawl 34 is engaged with one of the teeth 35, the second spool section 9b is not allowed to rotate at least in the belt withdrawing direction. The pawl 34 and the teeth 35 cooperate together to compose a locking mechanism of the present invention. The locking mechanism, the lock gear 11, and the vehicle sensor 27 cooperate together to compose an emergency locking mechanism of the present invention. Since the operation control of the pawl 34 by the control member and the cam hole 11b is conventionally known and is easily structured, and is not characterizing portion of the present invention even though it is a component of the present invention, the detailed description thereof will be omitted.

As shown in Fig. 2, a conventionally known torsion bar 36 is disposed to extend between the first and second spool sections 9a, 9b. The right end portion 36a as seen in Fig. 2 of the torsion bar 36 is adapted to rotate together with the first spool section 9a and the left end portion 36b as seen in Fig. 2 of the torsion bar 36 is adapted to rotate together with the second spool section 9b.

When the pawl 34 is engaged with one of the teeth 35 in the event of an emergency and the second spool section 9b is thus prevented from rotating in the belt withdrawing direction, the first spool section 9a is about to rotate in the belt withdrawing direction because the seat belt 4 is withdrawn by inertia of the occupant, the torsion bar 36 is torsionally deformed so as to absorb impact energy applied to the occupant by the seat belt 4.

By the way, the seat belt retractor 3 of this embodiment is provided with an end lock preventive mechanism for preventing an end lock as mentioned above which may occur due to the operation of the actuator 30 of the vehicle sensor 27 or the operation of the fly wheel 12 of the webbing sensor.

As shown in Fig. 3 and Fig. 5, the end lock preventive mechanism (corresponding to the first end lock preventive mechanism of the present invention) 37 for the vehicle sensor 27 comprises an end lock preventive lever (corresponding to the end lock preventive member of the present invention) 38, an end lock preventive lever position control spring 39 composed of a plate spring, an eccentric ring 13, and an eccentric gear 14.

The end lock preventive lever 38 is rotatably supported on the casing 10. The end lock preventive lever 38 has a locking lever 40 and an unlocking lever 41. The end lock preventive lever 38 has a projection 42 and an end lock preventive arm 43. The projection 42 is engaged selectively with one of first and second concavities 39a, 39b as curves respectively formed in an end lock preventive lever position control spring 39, thereby positioning the end lock preventive lever 38.

That is, when the projection 42 is engaged with the first concavity 39a as shown in Fig. 5, the end lock preventive lever 38 is positioned and held at such a position that the third lever operation cam 18 of the eccentric gear 14 is allowed to be in contact with the locking lever 40 and is not allowed to be in contact with the unlocking lever 41. In this case, the end lock preventive arm 43 is set at an end lock prevention cancelling position (corresponding to the non-locking position of the present invention) shown by a solid line in Fig. 5 so as to set the actuator 30 of the vehicle sensor 27 to an operable state. When the projection 42 is engaged with the second concavity 39b, the end lock preventive lever 38 is positioned and held at such a position that the third lever operation cam 18 is allowed to be in contact with the unlocking lever 41 and is not allowed to be in contact with the locking lever 40. In this case, the end lock preventive arm 43 is set at an end lock preventing position (corresponding to the locking position of the present invention) shown by a two-dot chain line in Fig. 5 so that the end lock preventive arm 43 comes in contact with the actuator 30 of the vehicle sensor 27 so as to lock the actuator 30 at the inoperable position. Accordingly, the actuator 30 is set in the inoperable state.

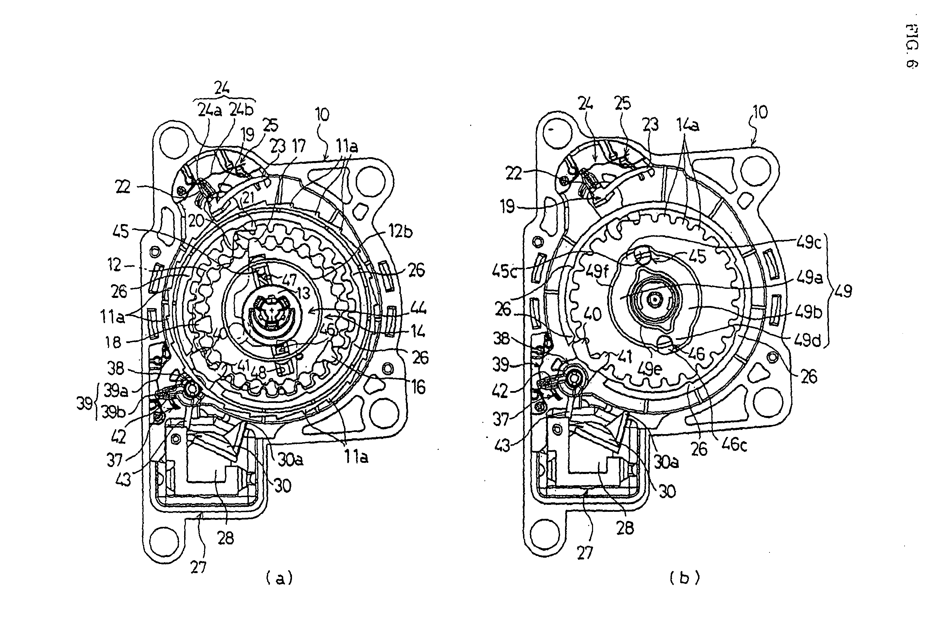

As shown in Fig. 3 and Figs. 6(a), 6(b), the end lock preventive mechanism (corresponding to the second end lock preventive mechanism of the present invention) 44 for the fly wheel 12 as the webbing sensor comprises a pair of stoppers (corresponding to the actuation preventive member of the present invention) 45, 46, the ring portion 12b of the fly wheel 12, the eccentric ring 13, the eccentric gear 14, a pair of guide grooves 47, 48 which are spaced from each other in the circumferential direction by an angle 180°so as to oppose each other and extend linearly, and a cam groove 49 formed in the casing 10.

The pair of stoppers 45, 46 are formed in completely the same configuration. Each stopper comprises a contact portion 45a, 46a which is allowed to be in contact with the inner periphery of the ring portion 12b of the fly wheel 12, a guided portion 45b, 46b which is guided to move along one of the pair of guide grooves 47, 48, and a cam follower 45c, 46c which moves along the cam groove 49.

The pair of guide grooves 47, 48 of the eccentric gear 14 guide the stoppers 45, 46 such that the guided portions 45b, 46b of the stoppers 45, 46 move in the radial direction of the eccentric gear 17.

The cam groove 49 of the casing 10 comprises a pair of small-diameter circular grooves 49a, 49b of which circle is coaxial with a circular hole 10a of the casing 10, through which the bush 50 passes, and is small, and a pair of large-diameter circular grooves 49c, 49d of which circle is also coaxial with the circular hole 10a and is large. The small-diameter circular grooves 49a, 49b and the large-diameter circular grooves 49c, 49d form a closed loop. In this case, the pair of small-diameter circular grooves 49a, 49b and the pair of large-diameter circular grooves 49c, 49d are alternately arranged in the circumferential direction of the circular hole 10a. The lengths in the circumferential direction of the pair of small-diameter circular grooves 49a, 49b are set to be equal to each other and the lengths in the circumferential direction of the pair of large-diameter circular grooves 49c, 49d are set to be equal to each other and shorter than the lengths in the circumferential direction of the small-diameter circular grooves 49a, 49b, respectively. The cam groove 49 of this embodiment is formed by an endless-type inner peripheral wall 49e and an endless-type outer peripheral wall 49f which project from the side wall of the casing 10 in the axial direction of the spool 9.

The cam follower 45c of the stopper 45 is positioned at one end side within the large-diameter circular groove 49c when the seat belt 4 is fully wound. In addition, the contact portion 45a is in contact with the inner periphery of the ring portion 12b to press the ring portion 12b in the outer radial direction.

Similarly, the cam follower 46c of the other stopper 46 is positioned at one end side within the large-diameter circular groove 49d when the seat belt 4 is fully wound. In addition, the contact portion 46a is in contact with the inner periphery of the ring portion 12b to press the ring portion 12b in the outer radial direction.

In this case, the cam follower 45c is positioned within the small-diameter circular groove 49a when the other cam follower 46c is positioned within the other small-diameter circular groove 49b. On the other hand, the cam follower 45c is positioned within the large-diameter circular groove 49c when the other cam follower 46c is positioned within the other large-diameter circular groove 49d. That is, the positions of the pair of cam followers 45c, 46c are controlled in synchronization with each other. Therefore, the contact portions 45a, 46a of the pair of stoppers 45, 46 come in contact with the inner periphery of the ring portion 12b to press the inner periphery in the outer radial direction simultaneously. Since the inner periphery of the ring portion 12b are pressed by the pair of contact portions 45a, 46a, the fly wheel 12 is set in the locked state where the fly wheel 12 can not oscillate.

A conventionally known spring mechanism 51 as a spring mechanism is attached to the casing 10. The biasing force of the spring mechanism 51 is transmitted to the spool 9 via the bush 50, whereby the spring mechanism 51 always biases the spool 9 in the belt winding direction. By the biasing force of the spring mechanism 51, the seat belt 4 is fully wound onto the spool 9 when the seat belt is not used.

Hereinafter, respective actions of the ELR-ALR switching mechanism 25, the end lock preventive mechanism 37 for the vehicle sensor 27, and the end lock preventive mechanism 44 for the fly wheel (webbing sensor) 12 will be described.

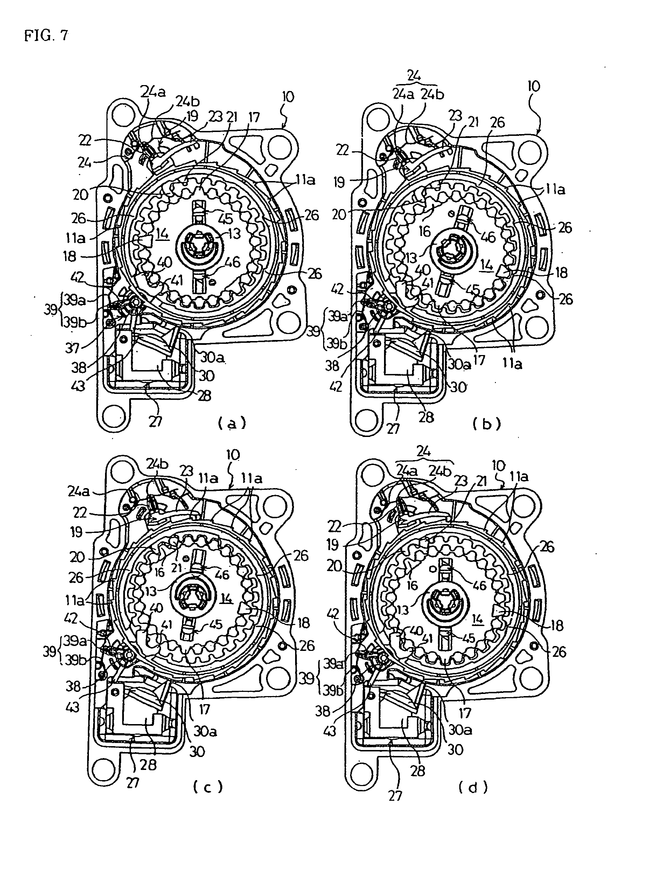

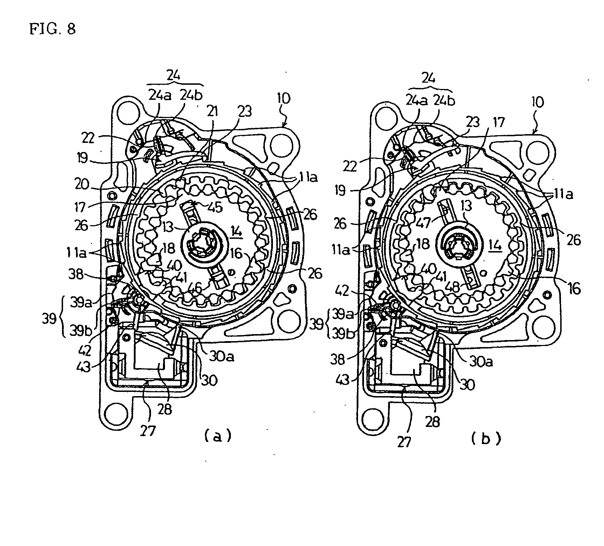

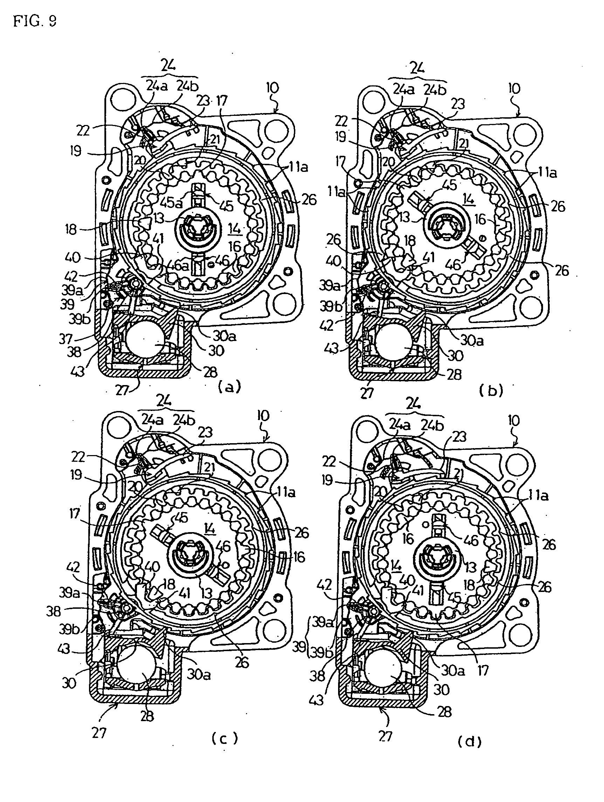

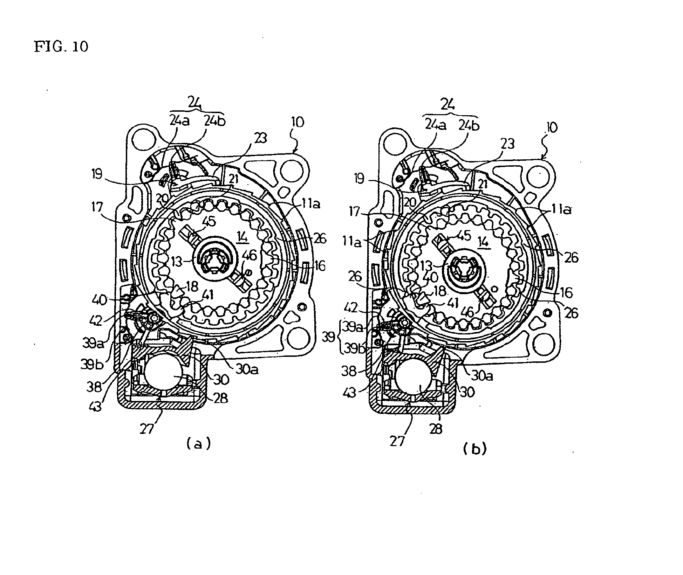

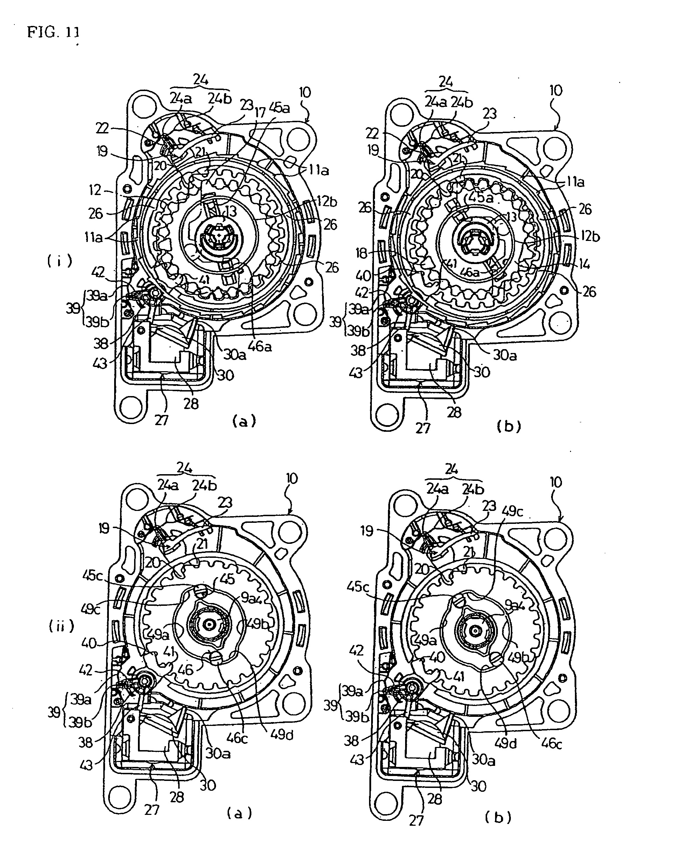

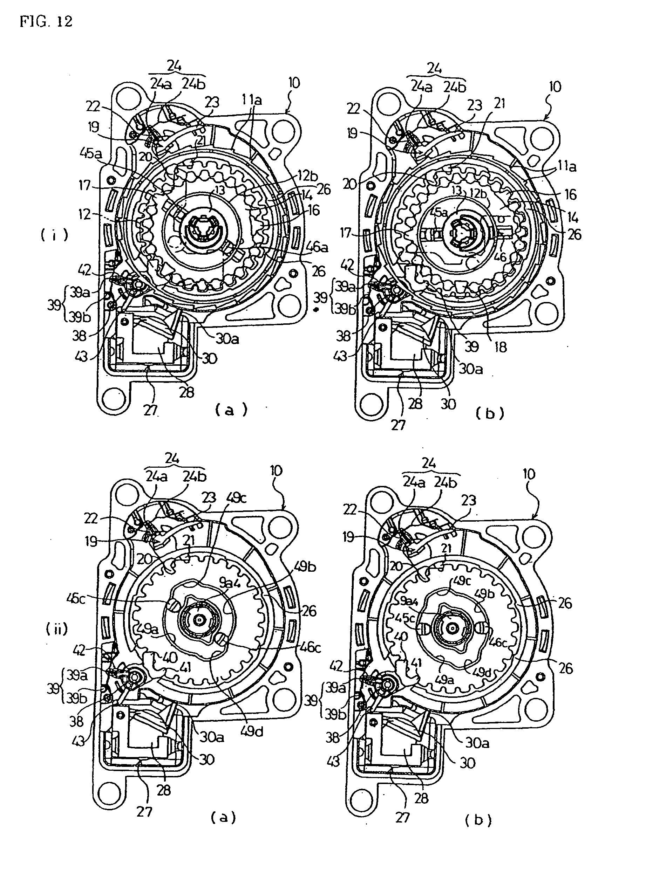

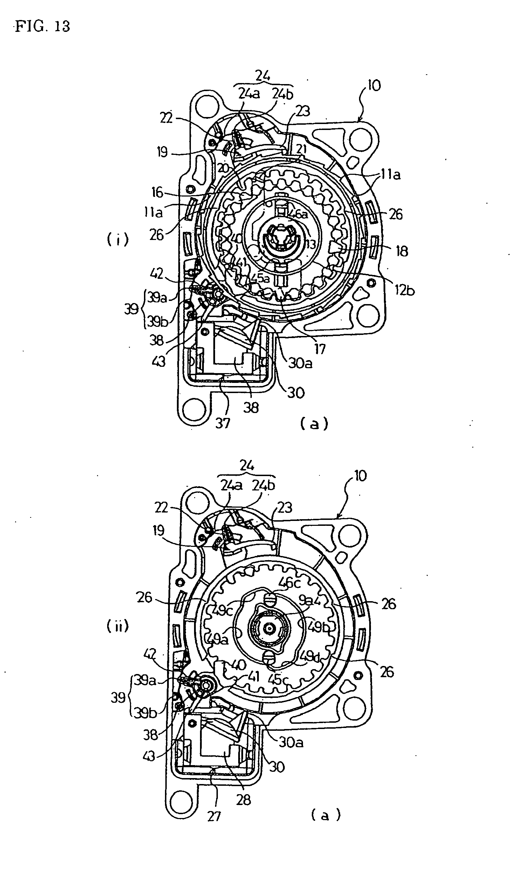

Figs. 7(a)-7(d) and Figs. 8(a)-8(b) are illustrations for explaining the switching actions from the ELR function mode to the ALR function mode. Figs. 9(a)-9(d) and Figs. 10(a) and 10(b) are illustrations for explaining the actions of the end lock preventive mechanism 37 for the vehicle sensor 27. Figs. 11(i)(a) and 11(i)(b), Figs. 12(i)(a) and 12(i)(b), and Fig. 13(i)(a) are illustrations for explaining the actions of the end lock preventive mechanism 44 for the fly wheel 12. Figs. 11(ii)(a) and 11(ii)(b), Figs. 12(ii)(a) and 12(ii)(b), and Fig. 13(ii)(a) are illustrations for explaining respective behaviors of the pair of stoppers 45, 46 and the cam groove 49 for controlling the actions of the end lock preventive mechanism 44 for the fly wheel 12.

When the seat belt 4 is fully wound by the seat belt retractor 3, the seat belt retractor 3 is set by the ELR-ALR switching mechanism 25 in a state where the seat belt retractor 3 can exercise the ELR mechanism. That is, the switching lever 19 is positioned such that the projection 22 is engaged with the first concavity 24a of the switching lever position control spring 24 as shown in Fig. 7(a). When the switching lever 19 is in this position, the first lever operation cam 16 is allowed to be in contact with the engaging lever 20 according to the eccentric position of the eccentric gear 14 and is not allowed to be in contact with the disengaging lever 21, while the second lever operation cam 17 is not allowed to be in contact with both the engaging lever 20 and the disengaging lever 21.

At this point, as shown in Fig. 9(a), the end lock preventive lever 38 of the end lock preventive mechanism 37 is positioned such that the projection 42 is engaged with the second concavity 39b of the end lock preventive lever position control spring 39. When the end lock preventive lever 38 is in this position, the third lever operation cam 18 is allowed to be in contact with the unlocking lever 41 according to the eccentric position of the eccentric gear 14 and is not allowed to be in contact with the locking lever 40. Therefore, in this state, the end lock preventive arm 43 of the end lock preventive lever 38 is set at the end lock preventing position so that the actuator 30 is set in the inoperative state.

Further, in this state, the contact portions 45a, 46a of the pair of stoppers 45, 46 of the end lock preventive mechanism 44 do not press the inner periphery of the ring portion 12b of the fly wheel 12.

As the seat belt 4 is started to be withdrawn from the seat belt retractor 3 in this state, the eccentric gear 14 starts to eccentrically rotate at a reduced speed in the belt winding direction (in the counterclockwise direction in Fig. 7(a)) opposite to the rotation of the spool 9. Soon, as shown in Fig. 11(ii)(a), the cam followers 45c, 46c of the pair of stoppers 45, 46 enter into the respective large-diameter circular grooves 49c, 49d. Then, as shown in Fig. 11(i)(a), the respective contact portions 45a, 46a press the inner periphery of the ring portion 12b so that the fly wheel 12 is locked from oscillating, that is, the fly wheel 12 is in its inoperable state.

As the seat belt 4 is further withdrawn, the pair of cam followers 45c, 46c further rotate in the belt winding direction so as to reach the ends of the large-diameter circular grooves 49c, 49d as shown in Fig. 11(ii)(b). While the pair of cam followers 45c, 46c are positioned within the respective large-diameter circular grooves 49c, 49d, as shown in Fig. 11(i)(b), the respective contact portions 45a, 46a continue pressing the ring portion 12b so as to maintain the lock of the fly wheel 12.

As the seat belt 4 is further withdrawn, the pair of cam followers 45c, 46c further rotate in the belt winding direction so as to come off the large-diameter circular grooves 49c, 49d and enter into the small-diameter circular grooves 49a, 49b as shown in Fig. 12(ii)(a). Accordingly, as shown in Fig. 12(i)(a), the respective contact portions 45a, 46a move apart from the inner periphery of the ring portion 12b so that the lock of the fly wheel 12 is cancelled. Therefore, the fly wheel 12 can oscillate and is thus in its operable state.

The rotational angle of the eccentric gear 14 from a point when the seat belt 4 is in the fully wound state to a point when the pair of cam followers 45c, 46c enter into the small-diameter circular grooves 49a, 49b as shown in Fig. 12(ii)(a) is about 60°. Therefore, the withdrawn amount of the seat belt 4 is slight. By the withdrawal of a slight amount of the seat belt 4 from the fully wound state, the fly wheel 12 is set from the inoperable state to the operable state, i.e. the state where the fly wheel 12 can exercise the same function as a conventional webbing sensor. Accordingly, when the seat belt 4 is withdrawn at a speed higher than that of the normal belt withdrawal for wearing the seat belt, the fly wheel 12 is actuated and the engaging claw 12c is thus engaged with one of the ratchet teeth 26, thereby preventing the lock gear 11 from rotating in the belt withdrawing direction. Therefore, since the spool 9 rotates relative to the lock gear 11 in the belt withdrawing direction, the pawl 34 is engaged with one of the internal teeth 35 of the side wall 8b, thereby preventing the second spool section 9b from rotating in the belt withdrawing direction. As a result, the withdrawal of the seat belt 4 is prevented.

At a point when the pair of cam followers 45c, 46c enter into the small-diameter circular grooves 49a, 49b, the third lever operation cam 18 comes in contact with the unlocking lever 41 of the end lock preventive lever 38 as shown in Fig. 9(b). After that, as the seat belt 4 is further withdrawn, the third lever operation cam 18 presses the unlocking lever 41 as shown in Fig. 9(c), whereby the end lock preventive lever 38 is pivotally moved so that the projection 42 thereof comes off the second concavity 39b of the end lock preventive lever position control spring 39 and is engaged with the first concavity 39a. Therefore, the end lock preventive arm 43 of the end lock preventive lever 38 is set and held at the end lock prevention cancelling position so that the actuator 30 of the vehicle sensor 27 becomes in its operable state. Accordingly, in the event of an emergency such as a vehicle collision where a large deceleration is applied to the vehicle, similarly to the conventional vehicle sensor, the actuator 30 is actuated by movement of the inertia ball 28 so as to allow the engaging claw 30a to be engaged with one of the ratchet teeth 11 a of the lock gear 11. By rotation of the lock gear 11 in the belt withdrawing direction by the withdrawal of the seat belt 4, one of the ratchet teeth 11a engages the engaging claw 30a, thereby preventing the lock gear 11 from rotating in the belt withdrawing direction. As a result, since the spool 9 rotates relative to the lock gear 11 in the belt withdrawing direction, the pawl 34 is engaged with one of the internal teeth 35 of the side wall 8b, thereby preventing the second spool section 9b from rotating in the belt withdrawing direction. Fig. 9(c) shows the actuator 30 in its operative state.

However, since the first spool section 9a further rotates in the belt withdrawing direction because the seat belt 4 is withdrawn by inertia of the occupant, the torsion bar 36 torsionally deforms similarly to a conventionally known torsion bar. The torsional deformation of the torsion bar 36 absorbs impact energy applied to the occupant by the seat belt 4.

As the seat belt 4 is further withdrawn, the third lever operation cam 18 passes through the end lock preventive lever 38 as shown in Fig. 12(i)(b). At this point, the end lock preventive lever 38 is held at the end lock prevention cancelling position so that the vehicle sensor 27 is maintained in its operable state. As shown in Fig. 12(ii)(b), the pair of cam followers 45c, 46c further rotate in the belt winding direction so as to move within the small-diameter circular grooves 49a, 49b. Therefore, as shown in Fig. 12(i)(b), the contact portion 45a as one of the contact portions is held in a state spaced from the inner periphery of the ring portion 12b, thereby maintaining the fly wheel 12 in its operable state.

As the seat belt 4 is further withdrawn, the eccentric gear 14 further eccentrically rotates in the belt winding direction so that the first lever operation cam 16 moves toward the engaging lever 20 of the switching lever 19. During this, the vehicle sensor 27 and the fly wheel 12 are maintained in their operable states.

Then, immediately before the seat belt 4 is fully withdrawn, as shown in Fig. 7(b), the first lever operation cam 16 comes in contact with the engaging lever 20 of the switching lever 19 and presses the engaging lever 20. Then, as shown in Fig. 7(c), the switching lever 19 pivotally moves so that the projection 22 of the switching lever 19 is engaged with the second concavity 24b of the switching lever position control spring 24. Accordingly, the switching lever 19 is positioned. That is, the engaging arm 23 of the switching lever 19 is held at such a position that the engaging arm 23 is allowed to be engaged with one of the ratchet teeth 11a of the lock gear 11. Accordingly, the seat belt retractor 3 is switched from the ELR function mode to the ALR function mode.

As the seat belt 4 is fully withdrawn, as shown in Fig. 7(d), one of the ratchet teeth 11a of the lock gear 11 is engaged with the engaging arm 23. Also in this state, the vehicle sensor 27 is maintained in its operable state as shown in Fig. 9(d) and the cam followers 45c, 46c of the stoppers 45, 46 are positioned at an end of the small-diameter circular groove 49a on the large-diameter circular groove 49d side and an end of the small-diameter circular groove 49b on the large-diameter circular groove 49c side, respectively, as shown in Fig. 13(ii)(a) so that the contact portions 45a, 46a are spaced apart from the inner periphery of the ring portion 12b as shown in Fig. 13(i)(a), that is, the fly wheel 12 is maintained in its operable state.

As the spool 9 is rotated in the belt winding direction from the state that the seat belt 4 is fully withdrawn, a certain amount of the seat belt 4 is wound onto the spool 9. During this, the lock gear 11 also rotates in the belt winding direction. When the lock gear 11 rotates in the belt winding direction, the engaging arm 23 slides on the ratchet teeth 11a and is not engaged with the ratchet teeth 11a. Therefore, the seat belt 4 is smoothly wound onto the spool 9. If the seat belt 4 is tried to be withdrawn after a predetermined amount of the seat belt 4 is wound, both the spool 9 and the lock gear 11 are rotated in the belt withdrawing direction, but immediately one of the ratchet teeth 11a of the lock gear 11 is engaged with the engaging arm 23. Accordingly, the spool 9 and the lock gear 11 are prevented from rotating in the belt withdrawing direction so that the seat belt 4 is not allowed to be withdrawn. In this manner, the seat belt retractor 3 exercises the ALR function. By the rotation of the spool 9 in the belt winding direction, the eccentric gear 14 eccentrically rotates in the belt withdrawing direction.

As the seat belt 4 is further wound, the third lever operation cam 18 gradually comes closer to the locking lever 40 of the end lock preventive lever 38. By further winding of the seat belt 4, as shown in Fig. 10(a), the third lever operation cam 18 comes in contact with the locking lever 40 and presses the locking lever 40. Then, as shown in Fig. 10(b), the end lock preventive lever 38 is pivotally moved so that the projection 42 of the end lock preventive lever 38 comes off the first concavity 39a and is engaged with the second concavity 39b of the end lock preventive lever position control spring 39. Therefore, the end lock preventive arm 43 of the end lock preventive lever 38 is set and hold at the end lock preventing position so that the actuator 30 of the vehicle sensor 27 becomes in its inoperable state. Since the seat belt retractor 3 is set in the ALR function mode, however, the withdrawal of the seat belt 4 is prevented in the event of an emergency as mentioned above.

As the seat belt 4 is further wound and closes to being fully wound, as shown in Fig. 8(a), the second lever operation cam 17 comes in contact with the disengaging lever 21 of the switching lever 19 and presses the disengaging lever 21. Then, as shown in Fig. 8(b), the switching lever 19 is pivotally moved so that the projection 22 of the switching lever 19 comes off the second concavity 24b and is engaged with the first concavity 24a of the switching lever position control spring 24. Therefore, the engaging arm 23 of the switching lever 19 is set at such a position that the engaging arm 23 is not allowed to be engaged with any one of the ratchet teeth 11a of the lock gear 11. Accordingly, the seat belt retractor 3 is switched from the ALR function mode to the ELR function mode.

As the seat belt 4 is further wound, as shown in Fig. 11(ii)(b), the cam followers 45c, 46c of the stoppers 45, 46 enter into the large-diameter circular grooves 49c, 49d from the small-diameter circular grooves 49a, 49b, respectively. Therefore, the contact portions 45a, 46a come in contact with the inner periphery of the ring portion 12b and press the inner periphery of the ring portion 12b to lock the fly wheel 12 so that the fly wheel 12 becomes in its inoperable state.

As the seat belt 4 is then fully wound, the rotation of the spool 9 is stopped and the rotation of the eccentric gear 14 is also stopped. In this state, the vehicle sensor 27 and the fly wheel 12 are locked so that the vehicle sensor 27 and the fly wheel 12 are in their inoperable states.

According to the seat belt retractor 3 of this embodiment, when the seat belt is fully or nearly fully wound, the end lock preventive lever 38 disposed on the frame 8 is controlled by the third lever operation cam 18 disposed on the eccentric gear 14 of the ELR-ALR switching mechanism 25 to be set at the locking position where the engaging claw 30a of the actuator 30 of the vehicle sensor 27 is not allowed to be engaged with any one of the ratchet teeth 11a of the lock gear 11. Therefore, when the seat belt is fully or nearly fully wound, an end lock due to the vehicle sensor 27 can be prevented. Since the end lock preventive lever 38 is not required to rotate together with the eccentric gear 14 of the ELR-ALR switching mechanism 25, the end lock preventive lever 38 can be designed to have a reduced operational range and thus requires only a small moving space.

In addition, since the end lock preventive lever 38 is not required to pass through a space between the ratchet teeth 11a of the lock gear 11 and the engaging claw 30a of the vehicle sensor 27, there is no possibility that the end lock preventive lever 38 interferes the engaging claw 30a. Therefore, the distance between the engaging claw 30a and the ratchet teeth 11a is not required to be changed similarly to the conventional ELR. That is, the seat belt retractor 3 of this embodiment has the end lock preventive mechanism 37 so as to effectively prevent an end lock due to the engaging claw 30a of the vehicle sensor 27 and can be formed compact even with the end lock preventive mechanism 37.

In addition, the distance between the engaging claw 30a of the vehicle sensor 27 and the ratchet teeth 11a of the lock gear 11 is equal to a conventional ELR or ALR without end lock preventive mechanism for preventing an end lock due to the vehicle sensor 27. Accordingly, the moving distance of the engaging claw 30a between the inoperative position and the operative position is not required to be changed, thus preventing the vehicle sensor 27 from being large. Moreover, even with the end lock preventive mechanism 37, a conventional vehicle sensor can be used as the vehicle sensor 27 of the seat belt retractor 3 of this embodiment without any change, thereby manufacturing the seat belt retractor 3 of this embodiment inexpensively.

Since the eccentric gear 14 of the ALR is used for controlling the operation of the end lock preventive lever 38, an exclusive control member for controlling the end lock preventive lever 38 is not required besides the eccentric gear 14. Accordingly, the number of parts of the ALR can be reduced even when the end lock preventive mechanism 37 is provided.

Further, since the third lever operation cam 18 having a simple shape as an end lock preventive member control cam is simply disposed on the eccentric gear 14, the seat belt retractor can be flexibly and inexpensively adapted to various layouts of seat belt apparatuses 1 with less kind of parts by suitably setting the position of the third lever operation cam 18 relative to the eccentric gear 14.

Furthermore, since the end lock preventive mechanism 37 is provided with the eccentric gear 14 having the third lever operation cam 18 for switching the setting position of the end lock preventive lever 38, an end lock due to the vehicle sensor 27 can be stably prevented with a simple structure.

Since the operation of the fly wheel 12 is prevented by the end lock preventive mechanism 44 for preventing an end lock due to the fly wheel 12 of the webbing sensor when the seat belt is fully or nearly fully wound, an end lock due to the fly wheel 12 can be prevented in addition to the prevention of an end lock due to the vehicle sensor 27. Therefore, occurrence of an end lock when the seat belt 4 is fully or nearly fully wound is further effectively prevented.

Since the end lock preventive mechanism 44 is provided with the pair of stoppers 45, 46 which are controlled by rotation of the eccentric gear 14 to prevent the actuation of the fly wheel 12 when the seat belt 4 is fully or nearly fully wound, the actuation of the fly wheel 12 can be effectively prevented by a simple structure.

Further, since the end lock preventive mechanism 44 is composed of the ring portion 12b provided on the fly wheel 12 and the pair of stoppers 45, 46 for preventing the actuation of the fly wheel 12 by pressing the ring portion 12b when the seat belt 4 is fully or nearly fully wound, a conventional known webbing sensor can be employed without significant design change and the end lock preventive mechanism 44 can have a simple structure because all that is required is to simply press the ring portion 12b by the stoppers 45, 46.

On the other hand, according to the seat belt apparatus 1 of this embodiment, the seat belt retractor 3 of this embodiment is employed and thus respective end locks due to the vehicle sensor 27 and the fly wheel 12 can be effectively prevented, thereby improving the operability of the seat belt 4 and enabling smooth and stable action for wearing the seat belt 4 by the occupant.

Though the end lock preventive mechanism 44 for the webbing sensor (the fly wheel 12) is provided with the pair of stoppers 45, 46 and the pair of the guide grooves 47, 48, respectively, in the aforementioned embodiment, the present invention is not limited thereto. For example, two or more of stoppers for pressing the ring portion 12b and two or more of guide grooves for guiding the stoppers may be provided. In this case, the respective stoppers and the respective guide grooves may be formed at any positions in the circumferential direction of the eccentric gear 14. However, it is preferable to dispose the stoppers and the guide grooves at equal spaces in the circumferential direction of the eccentric gear 14 because the ring portion 12b can be pressed equally along the circumferential direction.

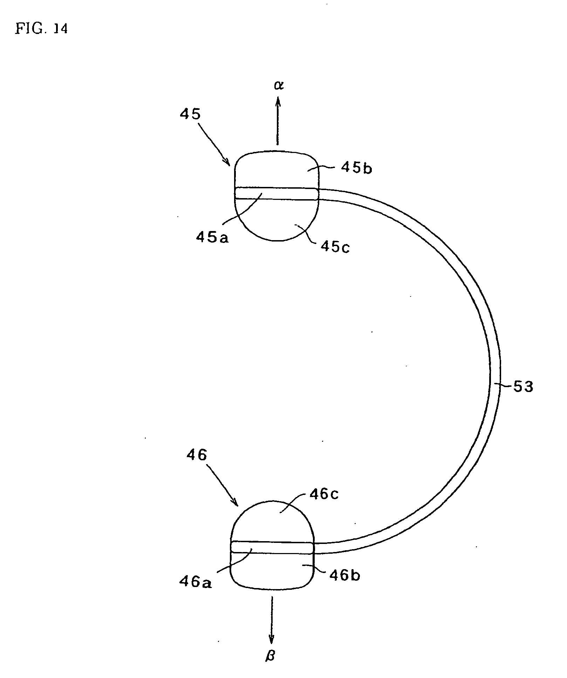

In addition, as shown in Fig. 14, the pair of stoppers 45, 46 may be adapted to press in outward radial directions α, β of the eccentric gear 14 by means of an elastic biasing member (corresponding to the stopper biasing means of the present invention) 53. Accordingly, the ring portion 12b of the fly wheel 12 can be locked by larger force. In this case, the pair of stoppers 45, 46 and the elastic biasing member 53 may be formed integrally from a resin or a metal. Alternatively, the pair of stoppers 45, 46 and the elastic biasing member 53 may be formed separately and the pair of stoppers may be connected by the elastic biasing member 53.

Further, the aforementioned embodiments are just illustrative examples for carrying out the seat belt retractor 3 of the present invention so that the respective components of the seat belt retractor 3 may be changed variously within a scope of claims of the present invention.

### Industrial Applicability

The seat belt retractor and the seat belt apparatus of the present invention are suitably used as a seat belt retractor in which an end lock due to a vehicle sensor or an end lock due to the vehicle sensor and a webbing sensor may occur and which has at least an emergency locking function and an automatic locking function, and a seat belt apparatus employing the seat belt retractor for restraining an occupant with a seat belt withdrawn from the seat belt retractor.

## Claims

1. A seat belt retractor comprising at least a seat belt (4) for restraining an occupant, a spool (9) which is rotatably supported by a frame (8) to wind up said seat belt (4), an emergency locking mechanism (11, 27, 34, 35) which detects a deceleration larger than the normal one when the deceleration acts on a vehicle and prevents said spool (9) from rotating in the belt withdrawing direction, wherein
said emergency locking mechanism (11, 27, 34, 35) comprises at least a locking mechanism (34, 35) which allows the rotation of said spool (9) when said emergency locking mechanism (11, 27, 34, 35) is not in operation and prevents the rotation of said spool (9) in the belt withdrawing direction when said emergency locking mechanism (11, 27, 34, 35) is in operation, a lock gear (11) which has ratchet teeth (11a) formed on the outer periphery thereof and arranged in an annular shape and which rotates together with said spool (9) when said emergency locking mechanism (11, 27, 34, 35) is not in operation and actuates said locking mechanism (34, 35) when said emergency locking mechanism (11, 27, 34, 35) is in operation because a relative rotation is created between said lock gear (11) and said spool (9), and a vehicle sensor (27) which has an engaging claw (30a) and which detects a deceleration larger than the normal one in the event of an emergency in which the deceleration acts on the vehicle and is thus actuated to engage said engaging claw (30a) with one of the ratchet teeth (11a) of said lock gear (11) to prevent the rotation of said lock gear (11) in the belt withdrawing direction, thereby creating a relative rotation between said spool (9) and said lock gear (11),
said seat belt retractor (3) further comprising a first end lock preventive mechanism (37) which prevents the engaging claw (30a) of said vehicle sensor (27) from being engaged with one of the ratchet teeth (11a) of said lock gear (11) when the seat belt (4) is fully or nearly fully wound by said spool (9), wherein
said first end lock preventive mechanism (37) comprises an end lock preventive member (38) which is disposed on said frame (8) and which is set at a locking position where said end lock preventive member (38) does not allow the engaging claw (30a) of said vehicle sensor (27) to be engaged with any one of the ratchet teeth (11a) of said lock gear (11) when said seat belt (4) is fully or nearly fully wound and is set at a non-locking position where said end lock preventive member (38) allows the engaging claw (30a) of said vehicle sensor (27) to be engaged with one of the ratchet teeth (11a) of said lock gear (11) other than when said seat belt (4) is fully or nearly fully wound, and a control element (18) which sets said end lock preventive member (38) at the locking position when said seat belt (4) is fully or nearly fully wound and sets said end lock preventive member (38) at the non-locking position other than when said seat belt (4) is fully or nearly fully wound, **characterized by**
a webbing sensor (12) which is pivotally disposed on said lock gear (11) and which detects a withdrawal acceleration larger than normal withdrawal acceleration for wearing the seat belt (4) when said seat belt (4) is rapidly withdrawn and is thus actuated to prevent the rotation of said lock gear (11) in the belt withdrawing direction so as to create a relative rotation between said spool (9) and said lock gear (11), and a second end lock preventive mechanism (44) for preventing the actuation of said webbing sensor (12) when said seat belt (4) is fully or nearly fully wound.

2. A seat belt retractor as claimed in claim 1, further comprising an automatic locking mechanism which is actuated when said seat belt (4) is fully withdrawn and prevents the withdrawal of said seat belt (4) on the way of winding said seat belt (4) after the seat belt (4) is fully withdrawn until a certain amount of the seat belt (4) is wound, and a lock switching mechanism (13, 14, 16, 17, 19) for switching an emergency locking function mode in which an emergency locking function by said emergency locking mechanism (11, 27, 34, 35) is exercised and an automatic locking function mode in which an automatic locking function by said automatic locking mechanism is exercised, wherein
said control element (18) is disposed on a control member of said lock switching mechanism (13, 14, 16, 17, 19).

3. A seat belt retractor as claimed in claim 2, wherein said lock switching mechanism (13, 14, 16, 17, 19) comprises a switching lever (19) which is selectively set at either of an emergency locking position where said emergency locking function mode is set or an automatic locking position where said automatic locking function mode is set, and an eccentric gear (14) which rotates when said spool (9) rotates and at a speed lower than the rotation speed of said spool (9) and which has switching lever control cam member for switching the setting position of said switching lever (19), wherein
the control member of said lock switching mechanism (13, 14, 16, 17, 19) is composed of said eccentric gear (14) and said end lock preventive member (38) is composed of an end lock preventive lever (38) which is selectively set at either of said locking position or said un-locking position, and wherein
said control element (18) is an end lock preventive member control cam for switching the setting position of said end lock preventive lever (38).

4. A seat belt retractor as claimed in any one of claims 1-3, wherein said second end lock preventive mechanism (44) has an actuation preventive member (45, 46) which is controlled its actuation by said eccentric gear (14) and prevents the actuation of said webbing sensor (12) when said seat belt (4) is fully or nearly fully wound.

5. A seat belt retractor as claimed in claim 4, wherein said second end lock preventive mechanism (44) further has a ring member (12b) disposed on said webbing sensor (12), and wherein said actuation preventive member (45, 46) is a stopper (45, 46) which presses said ring member (12b) to prevent the actuation of said webbing sensor (12) when said seat belt (4) is fully or nearly fully wound.

6. A seat belt retractor as claimed in claim 5, wherein said stopper (45, 46) is provided with a stopper biasing means (53) for biasing said stopper (45, 46) in such a direction that said stopper (45, 46) presses said ring member (12b).

7. A seat belt apparatus comprising at least a seat belt (4) for restraining an occupant, a seat belt retractor (3) which winds up said seat belt (4) while allowing the withdrawal of said seat belt (4) and is actuated in the event of an emergency so as to prevent the withdrawal of said seat belt (4), a tongue (6) slidably supported by said seat belt (4) withdrawn from said seat belt retractor (3), and a buckle (7) which is fixed to a vehicle floor or a vehicle seat (2) and to which said tongue (6) can be detachably latched,
wherein said seat belt retractor (3) is a seat belt retractor (3) as claimed in any one of claims 1 through 6.

## Patentansprüche

1. Sitzgurt-Aufrollvorrichtung umfassend mindestens einen Sitzgurt (4), um einen Insassen zu halten, eine Spule (9), welche drehbar durch einen Rahmen (8) gehalten wird, um den Sitzgurt (4) aufzuwickeln, einen Notfall-Verriegelungsmechanismus (11, 27, 34, 35), welcher eine Geschwindigkeitsabnahme, die größer als die normale ist, erfasst, wenn die Geschwindigkeitsabnahme auf ein Fahrzeug einwirkt, und verhindert, dass sich die Spule (9) in der den Gurt abwickelnden Richtung dreht,
wobei der Notfall-Verriegelungsmechanismus (11, 27, 34, 35) umfasst mindestens einen Verriegelungsmechanismus (34, 35), welcher die Drehung der Spule (9) ermöglicht, wenn sich der Notfall-Verriegelungsmechanismus (11, 27, 34, 35) nicht im Betrieb befindet, und die Drehung der Spule (9) in der den Gurt abwickelnden Richtung verhindert, wenn sich der Notfall-Verriegelungsmechanismus (11, 27, 34, 35) im Betrieb befindet, ein Verriegelungsgetriebe (11), welches Sperrzähne (11a) aufweist, welche auf dem Außenumfang davon ausgebildet und in einer kreisförmigen Form angeordnet sind, und welches sich zusammen mit der Spule (9) dreht, wenn sich der Notfall-Verriegelungsmechanismus (11, 27, 34, 35) nicht im Betrieb befindet, und welches den Verriegelungsmechanismus (34, 35) betätigt, wenn sich der Notfall-Verriegelungsmechanismus (11, 27, 34, 35) im Betrieb befindet, da eine relative Drehung zwischen dem Verriegelungsgetriebe (11) und der Spule (9) erzeugt wird, und einen Fahrzeug-Sensor (27), welcher eine Eingriffsklaue (30a) aufweist und welcher eine Geschwindigkeitsabnahme, die größer als die normale ist, in einem Notfall erfasst, in welchem die Geschwindigkeitsabnahme auf das Fahrzeug einwirkt, und daher veranlasst, dass die Eingriffsklaue (30a) mit einem der Verriegelungszähne (11a) des Verriegelungsgetriebes (11) in Eingriff kommt, um die Drehung des Verriegelungsgetriebes (11) in der den Gurt abwickelnden Richtung zu verhindern, wodurch eine relative Drehung zwischen der Spule (9) und dem Verriegelungsgetriebe (11) erzeugt wird, wobei die Sitzgurt-Aufrollvorrichtung (3) darüber hinaus einen ersten Mechanismus (37) zur Verhinderung einer Endverriegelung umfasst, welcher verhindert, dass die Eingriffsklaue (30a) des Fahrzeugs-Sensors (27) mit einem der Verriegelungszähne (11a) des Verriegelungsgetriebes (11) in Eingriff kommt, wenn der Sitzgurt (4) vollständig oder nahezu vollständig durch die Spule (9) aufgewickelt ist,
wobei der erste Mechanismus (37) zur Verhinderung der Endverriegelung umfasst ein Teil (38) zur Verhinderung der Endverriegelung, welches auf dem Rahmen (8) angeordnet ist und in eine verriegelnde Stellung eingestellt ist, in welcher das Teil (38) zur Verhinderung der Endverriegelung der Eingriffsklaue (30a) nicht ermöglicht, mit irgendeinem der Verriegelungszähne (11a) des Verriegelungsgetriebes (11) in Eingriff zu kommen, wenn der Sitzgurt (4) vollständig oder nahezu vollständig aufgewickelt ist, und in eine nicht verriegelnde Stellung eingestellt ist, in welcher das Teil (38) zur Verhinderung der Endverriegelung der Eingriffsklaue (30a) des Fahrzeugs-Sensors (27) ermöglicht, in Eingriff mit einem der Verriegelungszähne (11a) des Verriegelungsgetriebes (11) zu kommen, wenn der Sitzgurt (4) nicht vollständig oder nicht nahezu vollständig aufgewickelt ist, und ein Steuerelement (18), welches das Teil (38) zur Verhinderung der Endverriegelung in die verriegelnde Stellung einstellt, wenn der Sitzgurt (4) vollständig oder nahezu vollständig aufgewickelt ist, und das Teil (38) zur Verhinderung der Endverriegelung in die nicht verriegelnde Stellung einstellt, wenn der Sitzgurt (4) nicht vollständig oder nicht nahezu vollständig aufgewickelt ist,
**gekennzeichnet durch**
einen Gurt-Sensor (12), welcher schwenkbar auf dem Verriegelungsgetriebe (11) angeordnet ist und welcher eine abziehende Beschleunigung, welche größer als eine normale abziehende Beschleunig6ung beim Tragen des Sitzgurtes (4) ist, erfasst, wenn der Sitzgurt (4) rasch abgezogen wird und **dadurch** veranlasst, dass die Drehung des Verriegelungsgetriebes (11) in der den Gurt abwickelnden Richtung verhindert wird, um so eine relative Drehung zwischen der Spule (9) und dem Verriegelungsgetriebe (11) zu erzeugen, und einen zweiten Mechanismus (44) zur Verhinderung der Endverriegelung, um die Betätigung des Gurt-Sensors (12) zu verhindern, wenn der Sitzgurt (4) vollständig oder nahezu vollständig aufgewickelt ist.

2. Sitzgurt-Aufrollvorrichtung nach Anspruch 1, **dadurch gekennzeichnet, dass** die Sitzgurt-Aufrollvorrichtung darüber hinaus einen automatischen Verriegelungsmechanismus umfasst, welcher betätigt wird, wenn der Sitzgurt (4) vollständig abgezogen ist, und welcher das Abziehen des Sitzgurtes (4) beim Aufwickeln des Sitzgurtes (4) verhindert, nachdem der Sitzgurt (4) vollständig abgezogen worden ist, bis ein bestimmter Umfang des Sitzgurtes (4) aufgewickelt ist, und einen Mechanismus (13, 14, 16, 17, 19) zum Schalten einer Verriegelung, um in eine Notfall-Verriegelungsbetriebsart, bei welcher eine Notfall-Verriegelungsfunktion durch den Notfall-Verriegelungsmechanismus (11, 27, 34, 35) ausgeführt wird, und um in eine automatische Verriegelungsbetriebsart, bei welcher eine automatische Verriegelungsfunktion durch den automatischen Verriegelungsmechanismus ausgeführt wird, zu schalten,
wobei das Steuerelement (18) auf einem Steuerteil des Mechanismus (13, 14, 16, 17, 19) zum Schalten der Verriegelung angeordnet ist.

3. Sitzgurt-Aufrollvorrichtung nach Anspruch 2, **dadurch gekennzeichnet, dass** der Mechanismus (13, 14, 16, 17, 19) zum Schalten der Verriegelung umfasst einen Schalthebel (19), welcher selektiv entweder in eine Notfall-Verriegelungsstellung eingestellt ist, in welcher die Notfall-Verriegelungsbetriebsart eingestellt ist, oder in eine automatische Verriegelungsstellung eingestellt ist, in welcher die automatische Verriegelungsbetriebsart eingestellt ist, und ein exzentrisches Getriebe (14), welches sich, wenn sich die Spule (9) dreht, mit einer Geschwindigkeit, welche geringer als die Drehgeschwindigkeit der Spule ist, dreht und welches ein Schalthebel-Steuernockenteil aufweist, um die Stellung des Schalthebels (19) zu schalten,
wobei das Steuerteil des Mechanismus (13, 14, 16, 17, 19) zum Schalten der Verriegelung das exzentrische Getriebe (14) umfasst und das Teil (38) zur Verhinderung der Endverriegelung einen Hebel (38) zur Verhinderung der Endverriegelung umfasst, welcher selektiv entweder in die verriegelnde Stellung oder in die nicht verriegelnde Stellung eingestellt ist, und
wobei das Steuerelement (18) ein Steuernocken zur Verhinderung der Endverriegelung ist, um die Stellung des Hebels (38) zur Verhinderung der Endverriegelung zu schalten.

4. Sitzgurt-Aufrollvorrichtung nach einem der Ansprüche 1-3, **dadurch gekennzeichnet, dass** der zweite Mechanismus (44) zur Verhinderung einer Endverriegelung ein Teil (45, 46) zur Verhinderung einer Betätigung aufweist, dessen Betätigung durch das exzentrische Getriebe (14) gesteuert wird, und die Betätigung des Gurt-Sensors (12) verhindert, wenn der Sitzgurt (4) vollständig oder nahezu vollständig aufgewickelt ist.

5. Sitzgurt-Aufrollvorrichtung nach Anspruch 4, **dadurch gekennzeichnet, dass** der zweite Mechanismus (44) zur Verhinderung der Endverriegelung darüber hinaus ein Ringteil (12b) aufweist, welches auf dem Gurt-Sensor (12) angeordnet ist, und dass das Teil (45, 46) zur Verhinderung der Betätigung ein Stopper (45, 46) ist, welcher das Ringteil (12b) drückt, um die Betätigung des Gurt-Sensors (12) zu verhindern, wenn der Sitzgurt (4) vollständig oder nahezu vollständig aufgewickelt ist.

6. Sitzgurt-Aufrollvorrichtung nach Anspruch 5, **dadurch gekennzeichnet, dass** der Stopper (45, 46) mit den Stopper vorspannenden Mitteln (53) versehen ist, um den Stopper (45, 46) in solch einer Richtung vorzuspannen, dass der Stopper (45, 46) das Ringteil (12b) drückt.

7. Sitzgurt-Vorrichtung umfassend mindestens einen Sitzgurt (4), um einen Insassen zu halten, eine Sitzgurt-Aufrollvorrichtung (3), welche den Sitzgurt (4) aufwickelt während das Abwickeln des Sitzgurtes (4) ermöglicht wird und welche im Notfall betätigt wird, um das Abwickeln des Sitzgurtes (4) zu verhindern, eine Zunge (6), welche gleitend von dem Sitzgurt (4) gehalten wird, welcher von der Sitzgurt-Aufrollvorrichtung (3) abgewickelt ist, und ein Gurtschloss (7), welches an einem Boden des Fahrzeugs oder einem Sitz (2) des Fahrzeugs befestigt ist und mit welchem die Zunge (6) lösbar verriegelt werden kann,
wobei die Sitzgurt-Aufrollvorrichtung (3) eine Sitzgurt-Aufrollvorrichtung nach einem der Ansprüche 1 bis 6 ist.

## Revendications

1. Un enrouleur de ceinture de sécurité comprenant au moins une ceinture de sécurité (4) pour retenir un occupant, une bobine (9) qui est supportée en rotation par un cadre (8) pour enrouler ladite ceinture de sécurité (4), un mécanisme de verrouillage d'urgence (11, 27, 34, 35) qui détecte une décélération supérieure à la normale lorsque la décélération agit sur un véhicule et qui empêche ladite bobine (9) de tourner dans le sens du retrait de la ceinture, dans lequel
ledit mécanisme de verrouillage d'urgence (11, 27, 34, 35) comprend au moins un mécanisme de verrouillage (34, 35) qui permet la rotation de ladite bobine (9) lorsque ledit mécanisme de verrouillage d'urgence (11, 27, 34, 35) n'est pas en fonctionnement et empêche la rotation de ladite bobine (9) dans la direction de retrait de la ceinture lorsque ledit mécanisme de verrouillage d'urgence (11, 27, 34, 35) est en fonctionnement, un engrenage de blocage (11) présentant des dents à rochet (11a) formés sur la périphérie externe de celui-ci et présentant une forme annulaire et qui tourne avec ladite bobine (9) lorsque ledit mécanisme de verrouillage d'urgence (11, 27, 34, 35) n'est pas en fonctionnement et qui actionne ledit mécanisme de verrouillage (34, 35) lorsque ledit mécanisme de verrouillage d'urgence (11, 27, 34, 35) est en fonctionnement, grâce à la création du rotation relative entre ledit engrenage de blocage (11) et ladite bobine (9), et un capteur de véhicule (27) présentant une griffe d'encliquetage (30a) et qui détecte une décélération supérieure à la normale dans le cas d'une urgence où la décélération agit sur le véhicule et est donc actionné pour encliqueter ladite griffe d'encliquetage (30a) avec une des dents à rochet (11a) dudit engrenage de blocage (11) pour empêcher la rotation dudit engrenage de blocage (11) dans la direction de retrait de la ceinture, créant ainsi une rotation relative entre ladite bobine (9) et ledit engrenage de blocage (11),
ledit enrouleur de ceinture de sécurité (3) comprenant en outre un premier mécanisme anti-blocage d'extrémité (37) qui empêche la griffe d'encliquetage (30a) dudit capteur de véhicule (27) d'être encliquetée avec l'une des dents à rochet (11a) dudit engrenage de blocage (11) lorsque la ceinture de sécurité (4) est entièrement ou presque entièrement enroulée par ladite bobine (9), dans lequel
ledit premier mécanisme anti-blocage d'extrémité (37) comprend un élément anti-blocage d'extrémité (38) qui est disposé sur ledit cadre (8) et qui est positionné à une position de blocage où ledit élément anti-blocage (38) ne permet pas à la griffe d'encliquetage (30a) dudit capteur de véhicule (27) d'être encliquetée avec l'une quelconque des dents du rochet (11a) dudit engrenage de blocage (11) lorsque ladite ceinture de sécurité (4) est entièrement ou presque entièrement enroulée et est positionné à une position de non-blocage où ledit élément anti-blocage d'extrémité (38) permet à la griffe d'encliquetage (30a) dudit capteur de véhicule (27) de venir en prise avec l'une des dents à rochet (11a) dudit engrenage de blocage (11) sauf lorsque ladite ceinture de sécurité (4) est entièrement ou presque entièrement enroulée, et un élément de commande (18) qui positionne ledit élément anti-blocage d'extrémité (38) à la position de blocage lorsque ladite ceinture de sécurité (4) est entièrement ou presque entièrement enroulée et qui positionne ledit élément anti-blocage d'extrémité (38) à la position de non-blocage sauf lorsque ladite ceinture de sécurité (4) est entièrement ou presque entièrement enroulée, **caractérisé par**
un capteur de sangle (12) qui est disposé pivotant sur ledit engrenage de blocage (11) et qui détecte une accélération de retrait plus grande que l'accélération de rétractation normale de portée de la ceinture de sécurité (4) lorsque ladite ceinture de sécurité (4) est rapidement retirée et est donc actionné pour empêcher la rotation dudit engrenage de blocage (11) dans la direction de retrait de la ceinture de façon à créer une rotation relative entre ladite bobine (9) et ledit engrenage de blocage (11), et un deuxième mécanisme anti-blocage d'extrémité (44) pour empêcher l'actionnement dudit capteur de sangle (12) lorsque ladite ceinture de sécurité (4) est entièrement ou presque entièrement enroulée.

2. Un enrouleur de ceinture de sécurité selon la revendication 1, comprenant en outre un mécanisme de blocage automatique qui est actionné lorsque ladite ceinture de sécurité (4) est entièrement retirée et empêche le retrait de ladite ceinture de sécurité (4) sur le chemin de l'enroulement de ladite ceinture (4) après que la ceinture de sécurité (4) ait été complètement retirée jusqu'à ce qu'une certaine longueur de la ceinture de sécurité (4) soit enroulée, et un mécanisme de commutation de blocage (13, 14, 16, 17, 19) pour la commutation en un mode de fonction à blocage d'urgence dans lequel une fonction de blocage d'urgence est exercée par ledit mécanisme de blocage d'urgence (11, 27, 34, 35) et en un mode de fonction à blocage automatique dans lequel une fonction de blocage automatique est exercée par ledit mécanisme de blocage automatique, dans lequel
ledit élément de commande (18) est disposé sur un organe de commande dudit mécanisme de commutation de blocage (13, 14, 16, 17, 19).

3. Un enrouleur de ceinture de sécurité selon la revendication 2, dans lequel ledit mécanisme de commutation de blocage (13, 14, 16, 17, 19) comprend un levier de commutation (19) qui est sélectivement positionné soit dans une position de blocage d'urgence où ledit mode de fonction de blocage d'urgence est activé, soit dans une position de blocage automatique où ledit mode de fonction de verrouillage automatique est activé, et un engrenage excentrique (14) qui tourne quand ladite bobine (9) tourne à une vitesse inférieure à la vitesse de rotation de ladite bobine (9) et qui a un organe formant came de commande de levier de commutation pour commuter le positionnement dudit levier de commutation (19), dans lequel
l'organe de commande dudit mécanisme de commutation de blocage (13, 14, 16, 17, 19) se compose dudit engrenage excentrique (14) et ledit élément anti-blocage d'extrémité (38) est composé d'un levier anti-blocage d'extrémité (38) qui est sélectivement positionné soit à ladite position de blocage soit à ladite position de non-blocage, et dans lequel
ledit élément de commande (18) est un came de commande d'élément anti-blocage d'extrémité pour commuter la position de positionnement du levier anti-blocage d'extrémité (38).

4. Un enrouleur de ceinture de sécurité selon l'une quelconque des revendications 1 à 3, dans lequel ledit deuxième mécanisme anti-blocage d'extrémité (44) présente un organe anti-actionnement (45, 46) dont l'actionnement est commandé par ledit engrenage excentrique (14) et empêche l'actionnement dudit capteur de sangle (12) lorsque ladite ceinture de sécurité (4) est entièrement ou presque entièrement enroulée.

5. Un enrouleur de ceinture de sécurité selon la revendication 4, dans lequel ledit deuxième mécanisme anti-blocage d'extrémité (44) comporte en outre un organe annulaire (12b) disposé sur ledit capteur de sangle (12), et dans lequel ledit organe empêchant l'actionnement (45, 46) est un organe d'arrêt (45, 46) qui exerce une pression sur ledit organe annulaire (12b) pour empêcher l'actionnement dudit capteur de sangle (12) lorsque ladite ceinture de sécurité (4) est entièrement ou presque entièrement enroulée.

6. Un enrouleur de ceinture de sécurité selon la revendication 5, dans lequel ledit organe d'arrêt (45, 46) est muni d'un moyen de sollicitation d'organe d'arrêt (53) pour solliciter ledit organe d'arrêt (45, 46) dans un sens tel que ledit organe d'arrêt (45, 46) exerce une pression sur ledit organe annulaire (12b).

7. Un dispositif de ceinture de sécurité comprenant au moins une ceinture de sécurité (4) pour retenir un occupant, un enrouleur de ceinture de sécurité (3) enroulant la ceinture de sécurité (4), tout en permettant le retrait de ladite ceinture de sécurité (4) et qui est actionné dans le cas d'urgence afin d'empêcher le retrait de ladite ceinture de sécurité (4), une languette (6) supportée de façon coulissant par ladite ceinture (4) retirée dudit enrouleur de ceinture de sécurité (3), et une boucle (7) qui est fixée à un plancher de véhicule ou un siège de véhicule (2) et sur laquelle ladite languette (6) peut être verrouillée de façon amovible,
dans lequel ledit enrouleur de ceinture de sécurité (3) est un enrouleur de ceinture de sécurité (3), selon l'une quelconque des revendications 1 à 6.
